# EUROPEAN PATENT APPLICATION

(11) **EP 4 823 039 A1**
(43) Date of publication of application: **14.10.2026**
(21) Application number: 24902590.9
(22) Date of filing: 29.11.2024
(51) Int. Cl.: H04L 9/32, G06F 21/44, H04L 9/08

(54) **SECURE ACCESS METHOD, APPARATUS AND SYSTEM AND VEHICLE**

(30) Priority: 11.12.2023 CN 202311702925
(71) Applicant: Yinwang Intelligent Technologies Co., Ltd., Shenzhen, Guangdong 518110 (CN)
(72) Inventor: ZHANG, Yan, Shenzhen, Guangdong 518129 (CN); MA, Jianzhong, Shenzhen, Guangdong 518129 (CN); ZHANG, Zuoqiang, Shenzhen, Guangdong 518129 (CN); QIU, Yongcheng, Shenzhen, Guangdong 518129 (CN)
(74) Representative: Henselmann, Alexander Gerhard
(86) International application number: PCT/CN2024/135618
(87) International publication number: WO 2025/124168

(57) **Abstract**

This application relates to the field of security control technologies, and discloses a secure access method, an apparatus, a system, and a vehicle, to improve data security and vehicle security in a data access process. In the solutions, when a diagnostic device needs to access a vehicle, the diagnostic device may send an access request to a first apparatus in the vehicle, where the access request carries first information indicating a valid binding relationship between the diagnostic device and the vehicle. After security verification performed based on the first information succeeds, the first apparatus may allow the diagnostic device to access the vehicle. In view of this, performing authorization management on a diagnostic device and a vehicle can avoid impact of a security hazard in one vehicle on another vehicle. In addition, an isolation function provided by the first apparatus makes all keys of ECUs in the vehicle invisible to the diagnostic device. Therefore, there is no risk of leakage of a key of an ECU in a target vehicle, to avoid impact on security of the target vehicle and another vehicle.

## Description

This application claims priority to Chinese Patent Application No. 202311702925.6, filed with the China National Intellectual Property Administration on December 11, 2023 and entitled "SECURE ACCESS METHOD, APPARATUS, SYSTEM, AND VEHICLE", which is incorporated herein by reference in its entirety.

### TECHNICAL FIELD

This application relates to the field of security control technologies, and in particular, to a secure access method, an apparatus, a system, and a vehicle.

### BACKGROUND

Currently, in the field of intelligent vehicles, diagnostic instruments are widely used for vehicle problem diagnosis, issue resolution, software upgrade, and the like. In this process, the diagnostic instruments inevitably need to read, write, or modify vehicle-related data, which poses a specific security risk to the vehicles.

To improve data security in a vehicle, when a diagnostic instrument requests to access vehicle-related data, a security server usually performs security verification on the diagnostic instrument, and allows the diagnostic instrument to access the related data in the vehicle after the verification succeeds. However, based on this security verification mechanism, once the verification on the diagnostic instrument succeeds, the diagnostic instrument can access any data in the vehicle. It is known that the diagnostic instrument usually has high permission, for example, has functions such as querying a status of each component of the vehicle, reading and writing a configuration word, querying and clearing a trouble code, modifying code, and flashing software. Therefore, the conventional security verification mechanism still poses a high risk to the vehicle.

### SUMMARY

This application provides a secure access method, an apparatus, a system, and a vehicle, to improve data security and vehicle security in a data access process.

To achieve the foregoing objective, the following technical solutions are used in this application.

According to a first aspect, a secure access method is provided. The method may be applied to a first apparatus in a first vehicle. The method includes the following steps.

First, the first apparatus receives a first access request that is from a first diagnostic device and that is used to request to access the first vehicle. The first access request carries first information, and the first information indicates a valid binding relationship between the first diagnostic device and the first vehicle. In an example, the first diagnostic device is a diagnostic instrument. The valid binding relationship between the first diagnostic device and the first vehicle means that it is determined, based on the first information, that the first diagnostic device is allowed to access the first vehicle. In an example, the first information may be obtained by the first diagnostic device from a server, and the first information may be specific to one vehicle.

Then, the first apparatus performs, based on the first information, first security verification on permission of the first diagnostic device to access the first vehicle.

Finally, when the first security verification succeeds, the first apparatus sends a first feedback message to the first diagnostic device. The first feedback message indicates that the first diagnostic device is allowed to access the first vehicle. In an example, when the first security verification succeeds, the first apparatus may unlock the vehicle or one or more electronic control units (electronic control unit, ECU) in the vehicle, and send the first feedback message to the first diagnostic device.

In some examples, the first apparatus may send a second feedback message to the first diagnostic device when the first security verification fails. The second feedback message indicates that the first vehicle does not allow the first diagnostic device to access the first vehicle.

In an example, the first access request is used to request one or more of the following: reading data in the first vehicle, modifying data in the first vehicle, or writing data into the first vehicle.

According to the solution provided in the first aspect, when having a requirement of accessing a vehicle (for example, the first vehicle), a diagnostic device may send an access request to a first apparatus in the vehicle, where the access request carries first information indicating a valid binding relationship between the diagnostic device and the vehicle. In this way, after the security verification performed, based on the first information, on permission of the diagnostic device to access the first vehicle succeeds, the first apparatus may allow the diagnostic device to access the vehicle. In view of this, performing authorization management of a valid binding relationship between the diagnostic device and a vehicle can avoid impact of a security hazard in one vehicle to another vehicle. For example, even if first information used to access a target vehicle is obtained by a third party, because the first information indicates a valid binding relationship between the diagnostic device and the target vehicle, but cannot indicate a valid binding relationship between the diagnostic device and another vehicle, and cannot indicate a valid binding relationship between another diagnostic device and the first vehicle or the another vehicle, the third party cannot access the first vehicle and the another vehicle based on the first information, and therefore, security of vehicles is not affected. In addition, an isolation function provided by a first apparatus in the target vehicle can prevent the diagnostic device from obtaining a key of an ECU in the vehicle. In other words, the key (including a key of a target ECU) of the ECU in the vehicle is invisible to the diagnostic device. Therefore, a risk of leakage of the key of the ECU in the target vehicle is eliminated, and further, impact on security of the target vehicle and the another vehicle can be avoided.

In a possible implementation, the first apparatus has a key of the ECU in the first vehicle, and the first diagnostic device does not store the key of the ECU in the first vehicle. In view of this, through the isolation function of the first apparatus, impact of obtaining the key of the ECU in the vehicle by the diagnostic device on security of the ECU can be avoided.

In a possible implementation, the first information is information encrypted in a first encryption manner, and the first information indicates a temporal key. That the first apparatus performs, based on the first information, the first security verification on the permission of the first diagnostic device to access the first vehicle includes: The first apparatus decrypts the first information in a first decryption manner that is indicated by the server and that corresponds to the first encryption manner, to obtain the temporal key; and the first apparatus verifies the temporal key according to a symmetric key authentication algorithm, to perform the first security verification. It may be understood that the temporal key usually has a validity period. Therefore, when the diagnostic device needs to access a first ECU in the first vehicle, the diagnostic device may send, to the first apparatus, the temporal key indicating the valid binding relationship between the diagnostic device and the vehicle. This improves data security and vehicle security in a data access process, and reduces impact of obtaining the temporal key by a third party on security of the first vehicle. For example, when the third party maliciously accesses the first vehicle based on the obtained temporal key, the temporal key may have expired, and therefore, security of the first vehicle is not affected. In addition, because the first information is the encrypted temporal key, security of a process of transmitting the temporal key from the first diagnostic device to the first apparatus may also be improved.

In this implementation, that the temporal key indicates the valid binding relationship between the first diagnostic device and the first vehicle means that the first apparatus may determine, based on the temporal key, that the first diagnostic device is allowed to access the first vehicle. For example, a key stored in the first apparatus is the same as the temporal key, or a key stored in the first apparatus and the temporal key are a public-private key pair.

In a possible implementation, the temporal key is encrypted in an encryption manner indicated by the server, and that the first apparatus decrypts the first information to obtain the temporal key includes: The first apparatus decrypts the first information in a decryption manner indicated by the server to obtain the temporal key. For example, the encryption manner indicated by the server may include but is not limited to a Prek encryption manner. In view of this, security of a process of transmitting the temporal key from the first diagnostic device to the first apparatus can be improved.

In a possible implementation, the first access request is used to request to access the first ECU in the first vehicle, the temporal key is a 27 service key, and that the first apparatus verifies the temporal key according to the symmetric key authentication algorithm includes: The first apparatus obtains a 27 service seed from the first ECU, and sends the 27 service seed to the first diagnostic device; the first apparatus obtains a first message authentication code (message authentication code, MAC) through calculation based on the 27 service key and the 27 service seed; the first apparatus receives a second MAC obtained through calculation by the first diagnostic device based on the 27 service key and the 27 service seed; and the first apparatus verifies whether the second MAC is the same as the first MAC. For example, if the second MAC is the same as the first MAC, the first security verification performed on the first diagnostic device by the first apparatus succeeds; or if the second MAC is different from the first MAC, the first security verification performed on the first diagnostic device by the first apparatus succeeds. In view of this, a reliable and accurate security verification result may be provided.

For example, the symmetric key authentication algorithm may include but is not limited to any one of the following: an AES (AES-cipher-based message authentication code, AES-CMAC) algorithm, an AES-cipher block chaining (AES-cipher block chaining, AES-CBC) algorithm, or an AES-GMAC CTR mode (AES-GMAC CTR mode, AES-GCM) algorithm.

In a possible implementation, the first information carried in the first access request is a device security certificate, and that the first apparatus performs, based on the first information, the first security verification on the permission of the first diagnostic device to access the first vehicle includes: The first apparatus verifies validity of the device security certificate. When the device security certificate is valid, the first apparatus verifies whether an identification number carried in the device security certificate is consistent with an identification number (for example, a vehicle identification number (vehicle identification number, VIN)) of the first vehicle, to perform the first security verification on the first diagnostic device. For example, the device security certificate may include but is not limited to a 29 service certificate. In view of this, a reliable and accurate security verification result may be provided.

In this implementation, that the device security certificate indicates the valid binding relationship between the first diagnostic device and the first vehicle means that the first apparatus may determine, based on the device security certificate, that the first diagnostic device is allowed to access the first vehicle. For example, a root certificate stored in the first apparatus has a preset correspondence with the device security certificate. For example, identification information of the root certificate stored in the first apparatus has a preset correspondence with identification information of the device security certificate.

In some examples, the device security certificate carried in the first access request may correspond to one vehicle. For example, the device security certificate carries one identification number, and the one identification number is the identification number of the first vehicle. In some examples, the device security certificate carried in the first access request may correspond to a plurality of vehicles. For example, the device security certificate carries a plurality of identification numbers, the plurality of identification numbers are identification numbers of a plurality of different vehicles, and the plurality of identification numbers include the identification number of the first vehicle. In view of this, a flexible security control mechanism may be provided, to authorize a device security certificate to a diagnostic device based on an actual requirement. For example, a device security certificate that can be used to access only one vehicle or a device security certificate that can be used to access a plurality of vehicles is authorized to the diagnostic device based on an actual requirement. In this way, data security and vehicle security in a data access process are improved, and a permission range of the diagnostic device is flexibly controlled.

In some examples, the first apparatus may verify the validity of the device security certificate and the identification number carried in the device security certificate according to an asymmetric key authentication algorithm. For example, the asymmetric key authentication algorithm may include but is not limited to any one of the following: an RSA algorithm, a digital signature arithmetic (digital signature arithmetic, DSA), an elliptic curve cryptography (elliptic curve cryptography, ECC) algorithm, or the like. This is not specifically limited.

In a possible implementation, the first access request further carries an identifier of the first ECU, the first access request is used to request to access the first ECU in the first vehicle, and the method further includes: The first apparatus requests, based on the identifier of the first ECU carried in the first access request, the first ECU to perform second security verification on the first apparatus to access the first ECU. The second security verification is performed based on the key of the first ECU, and the key of the first ECU is invisible to the first diagnostic device. With reference to the first security verification on the first diagnostic device performed by the first apparatus, in this implementation, the first security verification performed on the first diagnostic device by the first apparatus may be understood as out-of-vehicle security verification. The first security verification may be used to verify the permission of the first diagnostic device to access the first vehicle. The second security verification performed by the first ECU on the first apparatus to access the first ECU may be understood as in-vehicle security verification. The second security verification may be used to verify permission of the first apparatus to act as a proxy in accessing the first ECU. In view of this, based on out-of-vehicle and in-vehicle security verification isolation mechanisms of the first apparatus, more effective security verification can be performed on the diagnostic device to access the target ECU, and leakage of the key of the ECU can be avoided. For example, due to an isolation function of the first apparatus, the first diagnostic device cannot obtain the key of the ECU in the first vehicle. Therefore, a risk of leakage of the key of the ECU in the vehicle is eliminated, and further, security impact on the ECU is avoided.

In a possible implementation, the method further includes: The first apparatus obtains a third MAC, where the third MAC is obtained through calculation based on a stored key (for example, a first ECU key) of the first ECU and a service seed corresponding to the first ECU, and the service seed corresponding to the first ECU is obtained from the first ECU; and the first apparatus sends the third MAC to the first ECU, to request the first ECU to perform the second security verification. In view of this, a reliable and accurate in-vehicle security verification result may be provided.

In an example, when both the first security verification and the second security verification succeed, the first apparatus may send the first feedback message to the first diagnostic device. Alternatively, when the first security verification succeeds but the second security verification fails, the first apparatus may send, to the first diagnostic device, a third feedback message indicating that the first vehicle does not allow the first diagnostic device to access the first ECU.

In an example, one ECU in the first vehicle corresponds to one ECU key, and the service seed (for example, the 27 service seed) corresponding to the first ECU may be a randomly generated ephemeral service seed. In an example, a quantity of bits of the ECU key may be the same as a quantity of bits of the service seed corresponding to the first ECU, for example, 128 bits. This is not specifically limited.

It should be noted that the solution provided in this application may be applicable to a plurality of different device/product forms.

For example, in some examples, the first apparatus may have a diagnostic agent service and a key management service. In this case, the first apparatus may invoke the key management service to obtain the stored key of the first ECU, and obtain the third MAC through calculation based on the key of the first ECU and the service seed corresponding to the first ECU. For example, the first apparatus may be a chip having a diagnostic agent service and a key management service.

For another example, in some examples, the first apparatus does not have a key management service. In this case, the first apparatus may send the service seed corresponding to the first ECU to a module configured to provide a key management service, for example, a key management module. The key management module may obtain the stored key of the first ECU, obtain the third MAC through calculation based on the key of the first ECU and the service seed corresponding to the first ECU, and send the third MAC to the first apparatus. For example, the first apparatus may be a chip having a diagnostic agent service, and the key management module may be a chip having a key management service.

In a possible implementation, the method further includes: First, the first apparatus receives a second access request from the first diagnostic device, where the second access request carries second information and an identifier of a second ECU, the second access request is used to request to access the second ECU in the first vehicle, and the second information indicates a valid binding relationship between the first diagnostic device and the first vehicle. Then, the first apparatus performs, based on the second information, the first security verification on the permission of the first diagnostic device to access the first vehicle. Then, when the first security verification succeeds, the first apparatus requests the second ECU to perform, based on a key of the second ECU, second security verification on the first apparatus to access the second ECU, where the key of the second ECU is invisible to the first diagnostic device. Finally, when the second security verification succeeds, the first apparatus sends, to the first diagnostic device, a feedback message indicating that the first diagnostic device is allowed to access the second ECU. For example, the second ECU is different from the first ECU, and the second information is the same as the first information. In view of this, an authorization mechanism of authorizing, through one piece of information, one diagnostic device to access one vehicle may be used, to provide stricter security control on access of the diagnostic device to the vehicle. This improves data security and vehicle security in a data access process, and avoids impact of obtaining first information of one vehicle by a third party on security of another vehicle. Alternatively, the second ECU is different from the first ECU, and the second information is different from the first information. In view of this, an authorization mechanism of authorizing, through one piece of information, one diagnostic device to access one ECU in one vehicle may be used, to provide stricter security control on access of the diagnostic device to the ECU in the vehicle. This improves data security and vehicle security in a data access process, and avoids impact of obtaining first information of one ECU by a third party on security of another ECU.

In a possible implementation, the method further includes: First, the first apparatus receives a third access request from the second diagnostic device, where the third access request carries third information and an identifier of a third ECU, the third access request is used to request to access the third ECU in the first vehicle, and the third information indicates a valid binding relationship between the second diagnostic device and the first vehicle. Then, the first apparatus performs, based on the third information, first security verification on permission of the second diagnostic device to access the first vehicle. Then, when the first security verification succeeds, the first apparatus requests the third ECU to perform, based on a key of the third ECU, second security verification on the first apparatus to access the third ECU, where the key of the third ECU is invisible to the second diagnostic device. Finally, when the second security verification succeeds, the first apparatus sends, to the second diagnostic device, a feedback message indicating that the second diagnostic device is allowed to access the third ECU. In view of this, an authorization mechanism of authorizing, through one piece of information, one diagnostic device to access one vehicle may be used, to provide stricter security control on access of the diagnostic device to the vehicle. This improves data security and vehicle security in a data access process, and avoids impact of obtaining first information of one vehicle by a third party on security of another vehicle.

According to a second aspect, a secure access method is provided. The method may be applied to a diagnostic device. The method includes: The diagnostic device sends a request message for accessing a first vehicle to a server; the diagnostic device receives first information from the server, where the first information indicates a valid binding relationship between the diagnostic device and the first vehicle; and the diagnostic device sends a first access request to a first apparatus in the first vehicle, where the first access request is used to request to access a first ECU in the first vehicle, and the first access request carries the first information.

In an example, the first access request is used to request one or more of the following: reading data in the first ECU, modifying data in the first ECU, or writing data into the first ECU.

According to the solution provided in the second aspect, when a diagnostic device needs to access an ECU (for example, the first ECU) in a vehicle (for example, the first vehicle), the diagnostic device may request, from a server, first information indicating a valid binding relationship between the diagnostic device and the vehicle, and send, to a first apparatus in the vehicle, an access request carrying the first information. In view of this, performing authorization management of a valid binding relationship between the diagnostic device and a vehicle can avoid impact of a security hazard in one vehicle to another vehicle. For example, even if first information used to access a target vehicle is obtained by a third party, because the first information indicates a valid binding relationship between the diagnostic device and the target vehicle, but cannot indicate a valid binding relationship between the diagnostic device and another vehicle, and cannot indicate a valid binding relationship between another diagnostic device and the first vehicle or the another vehicle, the third party cannot access the first vehicle and the another vehicle based on the first information, and therefore, security of vehicles is not affected. In addition, an isolation function provided by a first apparatus in the target vehicle can prevent the diagnostic device from obtaining a key of an ECU in the vehicle. In other words, the key (including a key of a target ECU) of the ECU in the vehicle is invisible to the diagnostic device. Therefore, a risk of leakage of the key of the ECU in the target vehicle is eliminated, and further, impact on security of the target vehicle and the another vehicle can be avoided.

In a possible implementation, the first apparatus has a key of an ECU in the first vehicle, and the diagnostic device does not store the key of the ECU in the first vehicle. In view of this, through the isolation function of the first apparatus, impact of obtaining the key of the ECU in the vehicle by the diagnostic device on security of the ECU can be avoided.

In a possible implementation, the first access request further carries an identifier of the first ECU, and the first access request is used to request to access the first ECU in the first vehicle. In view of this, the ECU in the target vehicle can be accessed purposefully, to enrich application scenarios of the solution and make the solution applicable to diversified access requirements.

In a possible implementation, the first information carried in the first access request indicates a temporal key or a device security certificate. For example, that the temporal key indicates a valid binding relationship between a first diagnostic device and the first vehicle means that the first apparatus may determine, based on the temporal key, that the first diagnostic device is allowed to access the first vehicle. For example, a key stored in the first apparatus is the same as the temporal key, or a key stored in the first apparatus and the temporal key are a public-private key pair. That the device security certificate indicates the valid binding relationship between the first diagnostic device and the first vehicle means that the first apparatus may determine, based on the device security certificate, that the first diagnostic device is allowed to access the first vehicle. For example, a root certificate stored in the first apparatus has a preset correspondence with the device security certificate. For example, identification information of the root certificate stored in the first apparatus has a preset correspondence with identification information of the device security certificate. In view of this, the diagnostic device may request access to the first vehicle from the first apparatus based on the first information in different forms, so that the first apparatus can perform reliable and accurate security verification.

In a possible implementation, the first information is information encrypted in a first encryption manner. The method further includes: The diagnostic device receives fourth information from the server, where the fourth information is a temporal key encrypted in a second encryption manner. The diagnostic device decrypts the fourth information in a second decryption manner that corresponds to the second encryption manner and that is indicated by the server, to obtain the temporal key. The diagnostic device participates in, based on the temporal key obtained by decrypting the fourth information, first security verification performed by the first apparatus on permission of the diagnostic device to access the first vehicle. In view of this, security of a process of transmitting the temporal key from the server to the diagnostic device can be improved.

In a possible implementation, the first information indicates a 27 service key, and participating in, based on the temporal key obtained by decrypting the fourth information, the first security verification performed by the first apparatus on the permission of the first diagnostic device to access the first vehicle includes: The diagnostic device requests, from the first apparatus, a 27 service seed of the first ECU. The diagnostic device receives the 27 service seed of the first ECU from the first apparatus. The diagnostic device obtains a second MAC through calculation based on the 27 service key and the 27 service seed. The diagnostic device sends the second MAC to the first apparatus, where the second MAC is used by the first apparatus to perform the first security verification. In view of this, the first apparatus can perform the reliable and accurate first security verification on the diagnostic device by comparing a first MAC and the second MAC.

In some examples, the device security certificate carried in the first access request may correspond to one vehicle. For example, the device security certificate carries one identification number, and the one identification number is an identification number of the first vehicle. In some examples, the device security certificate carried in the first access request may correspond to a plurality of vehicles. For example, the device security certificate carries a plurality of identification numbers, the plurality of identification numbers are identification numbers of a plurality of different vehicles, and the plurality of identification numbers include an identification number of the first vehicle. In view of this, a flexible security control mechanism may be provided, to authorize a device security certificate to a diagnostic device based on an actual requirement. For example, a device security certificate that can be used to access only one vehicle or a device security certificate that can be used to access a plurality of vehicles is authorized to the diagnostic device based on an actual requirement. In this way, data security and vehicle security in a data access process are improved, and a permission range of the diagnostic device is flexibly controlled.

In a possible implementation, the method further includes: The diagnostic device sends a second access request to the first apparatus, where the second access request is used to request to access a second ECU in the first vehicle, and the second access request carries second information and an identifier of the second ECU. For example, the first ECU is different from the second ECU, and the second information is different from the first information. For example, the second ECU is different from the first ECU, and the second information is the same as the first information. In view of this, an authorization mechanism of authorizing, through one piece of information, one diagnostic device to access one vehicle may be used, to provide stricter security control on access of the diagnostic device to the vehicle. This improves data security and vehicle security in a data access process, and avoids impact of obtaining first information of one vehicle by a third party on security of another vehicle. Alternatively, the second ECU is different from the first ECU, and the second information is different from the first information. In view of this, an authorization mechanism of authorizing, through one piece of information, one diagnostic device to access one ECU in one vehicle may be used, to provide stricter security control on access of the diagnostic device to the ECU in the vehicle. This improves data security and vehicle security in a data access process, and avoids impact of obtaining first information of one ECU by a third party on security of another ECU.

In a possible implementation, the method further includes: The diagnostic device sends a request message for accessing a second vehicle to the server; the diagnostic device receives fifth information from the server, where the fifth information indicates a valid binding relationship between the diagnostic device and the second vehicle, and the fifth information is different from the first information; and the diagnostic device sends a third access request to a second apparatus in the second vehicle, where the third access request is used to request to access the second vehicle, and the third access request carries the fifth information. In view of this, an authorization mechanism of authorizing, through one piece of information, one diagnostic device to access one vehicle may be used, to provide stricter security control on access of the diagnostic device to the vehicle. This improves data security and vehicle security in a data access process, and avoids impact of obtaining first information of one vehicle by a third party on security of another vehicle.

According to a third aspect, a secure access method is provided. The method may be applied to a server. The method includes: The server receives a request message for accessing a first vehicle from a first diagnostic device; and the server sends first information to the first diagnostic device, where the first information indicates a valid binding relationship between the first diagnostic device and the first vehicle.

In the solution provided in the third aspect, when a diagnostic device needs to access an ECU (for example, a first ECU) in a vehicle (for example, the first vehicle), a server may send, to the diagnostic device, first information indicating a valid binding relationship between the diagnostic device and the vehicle, so that the diagnostic device can send, to a first apparatus in the vehicle, an access request carrying the first information. In view of this, the first apparatus can perform more targeted security verification on the diagnostic device to access the ECU, to improve data security and vehicle security in a data access process. In addition, because the first information indicates the valid binding relationship between the diagnostic device and the first vehicle, even if the first information is obtained by a third party, verification on the third party when accessing another vehicle based on the first information cannot succeed. Therefore, a security risk is not caused to the another vehicle.

In a possible implementation, the first information is information encrypted in a first encryption manner, and the first information is directly carried when the first diagnostic device sends an access request to the first vehicle. The method further includes: The server sends a first decryption manner to a first apparatus in the first vehicle, where the first decryption manner corresponds to the first encryption manner, and the first decryption manner is used by the first apparatus to decrypt the first information when the first apparatus receives the first information encrypted in the first encryption manner; the server sends fourth information to the first diagnostic device, where the fourth information is a temporal key encrypted in a second encryption manner; the server sends a second decryption manner to the first diagnostic device, where the second decryption manner corresponds to the second encryption manner, and the second decryption manner is used by the first diagnostic device to decrypt the fourth information when the first diagnostic device receives the fourth information encrypted in the second encryption manner, to obtain the temporal key. The temporal key obtained by decrypting the fourth information is used to participate in security verification when the first diagnostic device accesses the first vehicle. In view of this, security of a process of transmitting the temporal key from the server to the diagnostic device and security of a process of transmitting the temporal key to the first apparatus can be improved.

In a possible implementation, the first information carried in the first access request indicates a temporal key or a device security certificate. For example, that the temporal key indicates the valid binding relationship between the first diagnostic device and the first vehicle means that the first apparatus may determine, based on the temporal key, that the first diagnostic device is allowed to access the first vehicle. For example, a key stored in the first apparatus is the same as the temporal key, or a key stored in the first apparatus and the temporal key are a public-private key pair. That the device security certificate indicates the valid binding relationship between the first diagnostic device and the first vehicle means that the first apparatus may determine, based on the device security certificate, that the first diagnostic device is allowed to access the first vehicle. For example, a root certificate stored in the first apparatus has a preset correspondence with the device security certificate. For example, identification information of the root certificate stored in the first apparatus has a preset correspondence with identification information of the device security certificate. In view of this, the diagnostic device may request access to the first vehicle from the first apparatus based on the first information in different forms, so that the first apparatus can perform reliable and accurate security verification.

In some examples, the device security certificate carried in the first access request may correspond to one vehicle. For example, the device security certificate carries one identification number, and the one identification number is an identification number of the first vehicle. In some examples, the device security certificate carried in the first access request may correspond to a plurality of vehicles. For example, the device security certificate carries a plurality of identification numbers, the plurality of identification numbers are identification numbers of a plurality of different vehicles, and the plurality of identification numbers include an identification number of the first vehicle. In view of this, a flexible security control mechanism may be provided, to authorize a device security certificate to a diagnostic device based on an actual requirement. For example, a device security certificate that can be used to access only one vehicle or a device security certificate that can be used to access a plurality of vehicles is authorized to the diagnostic device based on an actual requirement. In this way, data security and vehicle security in a data access process are improved, and a permission range of the diagnostic device is flexibly controlled.

In a possible implementation, the method further includes: The server receives a request message for accessing a second vehicle from a second diagnostic device. The server sends third information to the second diagnostic device, where the third information indicates a valid binding relationship between the second diagnostic device and the second vehicle, and the third information is different from the first information. For example, the second vehicle is different from the first vehicle, and the second diagnostic device and the first diagnostic device are a same device or different devices. In view of this, an authorization mechanism of authorizing, through one piece of information, one diagnostic device to access one vehicle may be used, to provide stricter security control on access of the diagnostic device to the vehicle. This improves data security and vehicle security in a data access process, and avoids impact of obtaining first information of one vehicle by a third party on security of another vehicle.

According to a fourth aspect, a secure access method is provided. The method may be applied to a first apparatus in a first vehicle. The method includes: The first apparatus sends a fourth access request to a first ECU based on an indication of a first diagnostic device, where the fourth access request is used to request to perform second security verification on the first apparatus to access the first ECU, the access request carries a third MAC, and the second security verification is performed based on a key of the first ECU; and sends a first feedback message to the first diagnostic device when the second security verification succeeds, where the first feedback message indicates that the first diagnostic device is allowed to access the first ECU.

In an example, the access request sent by the first apparatus to the first ECU is used to request one or more of the following: reading data in the first ECU, modifying data in the first ECU, or writing data into the first ECU.

According to the solution provided in the fourth aspect, security isolation of a first apparatus can be used to prevent a diagnostic device from obtaining a key of an ECU in a vehicle, to prevent leakage of a key of a single ECU. For example, due to an isolation function of the first apparatus, the first diagnostic device cannot obtain a key of an ECU in the first vehicle. Therefore, a risk of leakage of the key of the ECU in the vehicle is eliminated, and further, security impact on the ECU is avoided. In addition, based on the solution, effective security verification can be performed on the diagnostic device to access a target ECU, to improve data security and vehicle security in a data access process.

In a possible implementation, the first apparatus has the key of the ECU in the first vehicle, and the diagnostic device does not store the key of the ECU in the first vehicle. In view of this, through the isolation function of the first apparatus, impact of obtaining the key of the ECU in the vehicle by the diagnostic device on security of the ECU can be avoided.

In a possible implementation, the method further includes: The first apparatus obtains the third MAC, where the third MAC is obtained through calculation based on the key (for example, a first ECU key) of the first ECU and a service seed corresponding to the first ECU, and the service seed corresponding to the first ECU is obtained from the first ECU. In view of this, a reliable and accurate in-vehicle security verification result may be provided.

In an example, when the second security verification succeeds, the first apparatus may send, to the first diagnostic device, the feedback message indicating that the first diagnostic device is allowed to access the first ECU, or when the second security verification fails, the first apparatus may send, to the first diagnostic device, a feedback message indicating that the first vehicle does not allow the first diagnostic device to access the first ECU.

In an example, the service seed corresponding to the first ECU is obtained by the first apparatus from the first ECU.

In an example, one ECU in the first vehicle corresponds to one ECU key, and the service seed (for example, a 27 service seed) corresponding to the first ECU may be a randomly generated ephemeral service seed.

It should be noted that the solution provided in this application may be applicable to a plurality of different device/product forms.

For example, in some examples, the first apparatus may have a diagnostic agent service and a key management service. In this case, the first apparatus may invoke the key management service to obtain the stored key of the first ECU, and obtain the third MAC through calculation based on the key of the first ECU and the service seed corresponding to the first ECU. For example, the first apparatus may be a chip having a diagnostic agent service and a key management service.

For another example, in some examples, the first apparatus does not have a key management service. In this case, the first apparatus may send the service seed corresponding to the first ECU to a module configured to provide a key management service, for example, a key management module. The key management module may obtain the stored key of the first ECU, obtain the third MAC through calculation based on the key of the first ECU and the service seed corresponding to the first ECU, and send the third MAC to the first apparatus. For example, the first apparatus may be a chip having a diagnostic agent service, and the key management module may be a chip having a key management service.

In a possible implementation, before the first apparatus sends the fourth access request to the first ECU, the method further includes: The first apparatus receives a first access request that is from the first diagnostic device and that is used to request to access the first ECU in the first vehicle, where the first access request carries first information and an identifier of the first ECU, and the first information indicates a valid binding relationship between the first diagnostic device and the first vehicle. The first apparatus performs, based on the first information, first security verification on permission of the first diagnostic device to access the first vehicle. In view of this, based on out-of-vehicle and in-vehicle security verification isolation mechanisms of the first apparatus, more effective security verification can be performed on the diagnostic device to access the target ECU, and the leakage of the key of the single ECU can be avoided. For example, due to the isolation function of the first apparatus, the first diagnostic device cannot obtain the key of the ECU in the first vehicle. Therefore, a risk of leakage of the key of the ECU in the vehicle is eliminated, and further, security impact on the ECU is avoided.

In an example, when both the first security verification and the second security verification succeed, the first apparatus may unlock the first ECU and send, to the first diagnostic device, the feedback message indicating that the first diagnostic device is allowed to access the first ECU.

In some examples, when the first security verification fails, the first apparatus may send, to the first diagnostic device, a feedback message indicating that the first vehicle does not allow the first diagnostic device to access the first ECU.

In a possible implementation, the first information is information encrypted in a first encryption manner, and the first information indicates a temporal key. That the first apparatus performs, based on the first information, the first security verification on the permission of the first diagnostic device to access the first vehicle includes: The first apparatus decrypts the first information in a first decryption manner to obtain the temporal key, where the first decryption manner is indicated by a server, and the first decryption manner corresponds to the first encryption manner; and the first apparatus verifies the temporal key according to a symmetric key authentication algorithm, to perform the first security verification on the first diagnostic device. It may be understood that the temporal key usually has a validity period. Therefore, when the diagnostic device needs to access the first ECU in the first vehicle, the diagnostic device may send, to the first apparatus, the temporal key indicating the valid binding relationship between the diagnostic device and the vehicle. This improves data security and vehicle security in the data access process, and reduces impact of obtaining the temporal key by a third party on security of the first vehicle. For example, when the third party maliciously accesses the first vehicle based on the obtained temporal key, the temporal key may have expired, and therefore, security of the first vehicle is not affected. In addition, because the first information is the encrypted temporal key, security of a process of transmitting the temporal key from the first diagnostic device to the first apparatus may also be improved.

In this implementation, that the temporal key indicates the valid binding relationship between the first diagnostic device and the first vehicle means that the first apparatus may determine, based on the temporal key, that the first diagnostic device is allowed to access the first vehicle. For example, a key stored in the first apparatus is the same as the temporal key, or a key stored in the first apparatus and the temporal key are a public-private key pair.

For example, the encryption manner indicated by the server may include but is not limited to a Prek encryption manner.

In a possible implementation, the temporal key is a 27 service key, and that the first apparatus verifies the temporal key according to the symmetric key authentication algorithm includes: The first apparatus obtains a 27 service seed from the first ECU based on the 27 service key, and sends the 27 service seed to the first diagnostic device; the first apparatus obtains a first MAC through calculation based on the 27 service key and the 27 service seed; the first apparatus receives a second MAC obtained through calculation by the first diagnostic device based on the 27 service key and the 27 service seed; and the first apparatus verifies whether the second MAC is the same as the first MAC. For example, if the second MAC is the same as the first MAC, the first security verification performed on the first diagnostic device by the first apparatus succeeds; or if the second MAC is different from the first MAC, the first security verification performed on the first diagnostic device by the first apparatus succeeds. In view of this, a reliable and accurate security verification result may be provided.

In a possible implementation, the first information carried in the first access request is a device security certificate, and that the first apparatus performs, based on the first information, the first security verification on the permission of the first diagnostic device to access the first vehicle includes: The first apparatus verifies validity of the device security certificate. When the device security certificate is valid, the first apparatus verifies whether an identification number carried in the device security certificate is consistent with an identification number (for example, a vehicle identification number (vehicle identification number, VIN)) of the first vehicle, to perform the first security verification on the first diagnostic device. For example, the device security certificate may include but is not limited to a 29 service certificate. In view of this, a reliable and accurate security verification result may be provided.

In this implementation, that the device security certificate indicates the valid binding relationship between the first diagnostic device and the first vehicle means that the first apparatus may determine, based on the device security certificate, that the first diagnostic device is allowed to access the first vehicle. For example, a root certificate stored in the first apparatus has a preset correspondence with the device security certificate. For example, identification information of the root certificate stored in the first apparatus has a preset correspondence with identification information of the device security certificate.

In some examples, the device security certificate carried in the first access request may correspond to one vehicle. For example, the device security certificate carries one identification number, and the one identification number is the identification number of the first vehicle. In some examples, the device security certificate carried in the first access request may correspond to a plurality of vehicles. For example, the device security certificate carries a plurality of identification numbers, the plurality of identification numbers are identification numbers of a plurality of different vehicles, and the plurality of identification numbers include the identification number of the first vehicle. In view of this, a flexible security control mechanism may be provided, to authorize a device security certificate to a diagnostic device based on an actual requirement. For example, a device security certificate that can be used to access only one vehicle or a device security certificate that can be used to access a plurality of vehicles is authorized to the diagnostic device based on an actual requirement. In this way, data security and vehicle security in a data access process are improved, and a permission range of the diagnostic device is flexibly controlled.

In a possible implementation, the method further includes: First, the first apparatus receives a second access request from the first diagnostic device, where the second access request carries second information and an identifier of a second ECU, the second access request is used to request to access the second ECU in the first vehicle, and the second information indicates a valid binding relationship between the first diagnostic device and the first vehicle. Then, the first apparatus performs, based on the second information, the first security verification on the permission of the first diagnostic device to access the first vehicle. Then, when the first security verification succeeds, the first apparatus requests the second ECU to perform, based on a key of the second ECU, second security verification on the first apparatus to access the second ECU, where the key of the second ECU is invisible to the first diagnostic device. Finally, when the second security verification succeeds, the first apparatus sends, to the first diagnostic device, a feedback message indicating that the first diagnostic device is allowed to access the second ECU. For example, the second ECU is different from the first ECU, and the second information is the same as the first information. In view of this, an authorization mechanism of authorizing, through one piece of information, one diagnostic device to access one vehicle may be used, to provide stricter security control on access of the diagnostic device to the vehicle. This improves data security and vehicle security in a data access process, and avoids impact of obtaining first information of one vehicle by a third party on security of another vehicle. Alternatively, the second ECU is different from the first ECU, and the second information is different from the first information. In view of this, an authorization mechanism of authorizing, through one piece of information, one diagnostic device to access one ECU in one vehicle may be used, to provide stricter security control on access of the diagnostic device to the ECU in the vehicle. This improves data security and vehicle security in a data access process, and avoids impact of obtaining first information of one ECU by a third party on security of another ECU.

In a possible implementation, the method further includes: First, the first apparatus receives a third access request from a second diagnostic device, where the third access request carries third information and an identifier of a third ECU, the third access request is used to request to access the third ECU in the first vehicle, and the third information indicates a valid binding relationship between the second diagnostic device and the first vehicle. Then, the first apparatus performs, based on the third information, first security verification on permission of the second diagnostic device to access the first vehicle. Then, when the first security verification succeeds, the first apparatus requests the third ECU to perform, based on a key of the third ECU, second security verification on the first apparatus to access the third ECU, where the key of the third ECU is invisible to the second diagnostic device. Finally, when the second security verification succeeds, the first apparatus sends, to the second diagnostic device, a feedback message indicating that the second diagnostic device is allowed to access the third ECU. In view of this, an authorization mechanism of authorizing, through one piece of information, one diagnostic device to access one vehicle may be used, to provide stricter security control on access of the diagnostic device to the vehicle. This improves data security and vehicle security in a data access process, and avoids impact of obtaining first information of one vehicle by a third party on security of another vehicle.

According to a fifth aspect, an apparatus is provided. The apparatus includes: a memory, configured to store computer program instructions and data; and a processor, configured to execute the computer program instructions, to support the apparatus in implementing the method according to any one of the possible implementations of the first aspect or the fourth aspect.

According to a sixth aspect, a diagnostic device is provided. The diagnostic device includes: a memory, configured to store computer program instructions and data; and a processor, configured to execute the computer program instructions, to support the diagnostic device in implementing the method according to any one of the possible implementations of the second aspect.

According to a seventh aspect, a server is provided. The server includes: a memory, configured to store computer program instructions and data; and a processor, configured to execute the computer program instructions, to support the server in implementing the method according to any one of the possible implementations of the third aspect.

According to an eighth aspect, a security verification system is provided. The security verification system includes the apparatus according to the fifth aspect and the server according to the seventh aspect.

According to a ninth aspect, a vehicle or another transport means is provided. The vehicle or the another transport means may include the apparatus according to the fifth aspect and one or more ECUs, to implement the method according to any one of the possible implementations of the first aspect or the third aspect.

According to a tenth aspect, a computer-readable storage medium is provided. The computer-readable storage medium stores computer program instructions. When the computer program instructions are executed by a processor, the method according to any one of the possible implementations of the first aspect, the second aspect, the third aspect, or the fourth aspect is implemented.

According to an eleventh aspect, a computer program product including instructions is provided. When the computer program product runs on a computer, the computer is enabled to implement the method according to any one of the possible implementations of the first aspect, the second aspect, the third aspect, or the fourth aspect.

According to a twelfth aspect, a chip system is provided. The chip system includes a processing circuit and a storage medium. The storage medium stores computer program instructions. When the computer program instructions are executed by a processor, the method according to any one of the possible implementations of the first aspect, the second aspect, the third aspect, or the fourth aspect is implemented. The chip system may include a chip, or may include a chip and another discrete component.

### BRIEF DESCRIPTION OF DRAWINGS

FIG. 1 is a diagram of a conventional security verification method;
FIG. 2 is a diagram of another conventional security verification method in a secure access process;
FIG. 3 is a diagram of a result of obtaining a key by a conventional diagnostic device;
FIG. 4 is a diagram of a system architecture according to an embodiment of this application;
FIG. 5 is a diagram 1 of a secure access process according to an embodiment of this application;
FIG. 6 is a diagram 2 of a secure access process according to an embodiment of this application;
FIG. 7 is a diagram 3 of a secure access process according to an embodiment of this application;
FIG. 8 is a flowchart 1 of a secure access method according to an embodiment of this application;
FIG. 9 is a diagram 1 of a secure access effect of a diagnostic device according to an embodiment of this application;
FIG. 10 is an example diagram 1 of a secure access process according to an embodiment of this application;
FIG. 11 is a diagram 2 of a secure access effect of a diagnostic device according to an embodiment of this application;
FIG. 12A to FIG. 12C are an interaction diagram 1 in a secure access process according to an embodiment of this application;
FIG. 13 is an example diagram 2 of a secure access process according to an embodiment of this application;
FIG. 14 is a diagram 3 of a secure access effect of a diagnostic device according to an embodiment of this application;
FIG. 15A to FIG. 15C are an interaction diagram 2 in a secure access process according to an embodiment of this application;
FIG. 16 is a diagram 4 of a secure access process according to an embodiment of this application;
FIG. 17 is a flowchart 2 of a secure access method according to an embodiment of this application;
FIG. 18A and FIG. 18B are an interaction diagram 3 in a secure access process according to an embodiment of this application;
FIG. 19 is an interaction diagram 4 in a secure access process according to an embodiment of this application;
FIG. 20 is a diagram 5 of a secure access process according to an embodiment of this application;
FIG. 21 is a flowchart 3 of a secure access method according to an embodiment of this application;
FIG. 22A and FIG. 22B are an interaction diagram 5 in a secure access process according to an embodiment of this application; and
FIG. 23 is a block diagram of a structure of a diagnostic device/server/first apparatus according to an embodiment of this application.

### DESCRIPTION OF EMBODIMENTS

The following describes the technical solutions in embodiments of this application with reference to the accompanying drawings in embodiments of this application. In the descriptions of embodiments of this application, "/" represents "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions in embodiments of this application, "a plurality of" means two or more.

In the following, terms "first", "second", and the like are merely used to distinguish between different described objects, and constitute no limitation on locations, a sequence, priorities, a quantity, content, or the like of the described objects. For example, if the described object is a "field", ordinal numbers before "field" in a "first field" and a "second field" do not limit locations or a sequence of the "fields", and "first" and "second" do not limit whether "fields" modified by "first" and "second" are in a same message, and do not limit a sequence of the "first field" and the "second field". For another example, if the described object is a "level", ordinal numbers before "level" in a "first level" and a "second level" do not limit priorities of the "levels". For another example, a quantity of described objects is not limited by an ordinal number, and may be one or more. In an example of a "first apparatus", a quantity of "apparatuses" may be one or more. In addition, objects modified by different prefix words may be the same or different. For example, if a described object is an "apparatus", a "first apparatus" and a "second apparatus" may be apparatuses of a same type, or apparatuses of different types. For another example, if a described object is "information", "first information" and "second information" may be information of same content or information of different content. In conclusion, in embodiments of this application, use of prefix words such as ordinal numbers used to distinguish between the described objects constitutes no limitation on the described objects. For descriptions of the described objects, refer to context descriptions in the claims or embodiments. The use of such prefix words should not constitute an unnecessary limitation.

In addition, in embodiments of this application, a "connection" may be a direct connection or an indirect connection, and may be an electrical connection or a communication connection. For example, a connection between two electrical elements A and B may mean that A is directly connected to B, may mean that A is indirectly connected to B through another electrical element or a connection medium, or may mean that A is indirectly connected to B through another communication apparatus or a communication medium, provided that A and B can communicate with each other.

It is known that in the field of intelligent vehicles, regardless of whether a vehicle is before delivery or during use by an owner after delivery, a diagnostic device (for example, a diagnostic instrument) may perform operations such as reading, writing, or modification on an in-vehicle component through a diagnosis interface like an on-board diagnostics (on-board diagnostics, OBD) system, to perform vehicle problem diagnosis, issue resolution, software upgrade, and the like, which has wide applications. As one of only a few external exposed interfaces of the vehicle, the OBD usually has high permission because the OBD bears high-level functions such as querying a status of each component of the vehicle, reading and writing a configuration word, querying and clearing a trouble code, modifying code, and flashing software. In addition, an authentication mechanism is set between ECUs in the vehicle, and the authentication mechanism requires that the ECUs interact based on keys. Therefore, a large quantity of keys are usually encapsulated in the vehicle. These keys may relate to keys preset by a chip vendor, keys preset by a device vendor, and keys preset by an original equipment manufacturer before delivery of the vehicle, and relate to an owner key set in the vehicle by the owner during use of the vehicle. In conclusion, once the OBD is maliciously cracked, a great security risk is caused to the vehicle. For example, after the OBD is maliciously compromised by a third party, the third party may access each ECU based on a key that is of the ECU and that is encapsulated in the vehicle, or because keys of ECUs of a same type are usually the same, the third party may obtain keys that are of ECUs and that are encapsulated in the vehicle and access ECUs of a same type in another vehicle based on the keys. In conclusion, a conventional authentication mechanism causes a security risk to a vehicle to be accessed, and causes a security risk to another vehicle.

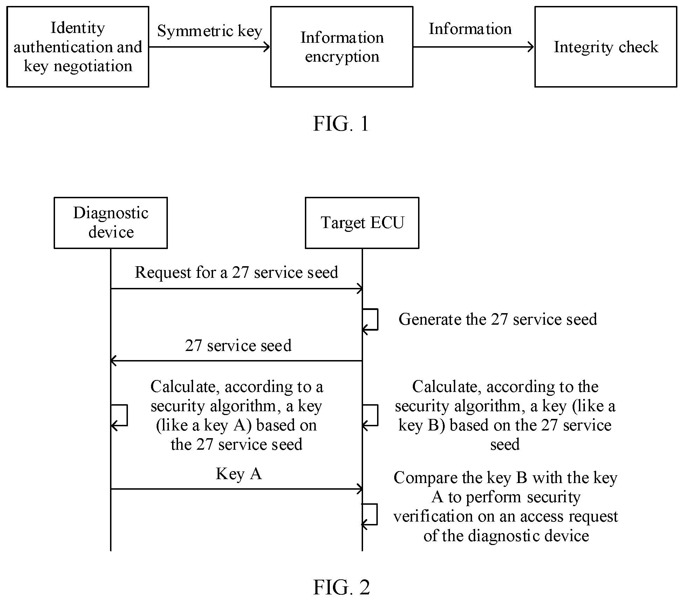

To improve data security and vehicle security in a process in which a diagnostic device accesses a vehicle, in some embodiments, the vehicle may perform security verification on the diagnostic device according to a security protocol like a transport layer security (transport layer security, TLS) protocol, for example, perform security verification between the vehicle and the diagnostic device or between the vehicle and a security service platform. As shown in FIG. 1, the TLS protocol mainly specifies identity authentication and key agreement required for establishing or resuming a secure session, and information encryption (including but not limited to symmetric encryption, asymmetric encryption, and the like). In some embodiments, the TLS protocol may further specify information integrity protection (for example, hash algorithm integrity protection), integrity check, and the like. When a secure session is established, the TLS protocol manages the following: key agreement, server and client identity authentication, session key information exchange, and the like. The key agreement refers to agreement between a server and a client on a key used during an entire message interaction process. The server and client identity authentication is, for example, the server proving identity of the server to the client. The session key information exchange is, for example, exchange of random numbers and a special number called a pre-master key between the client and the server.

However, in embodiments, no protection mechanism is provided for secure access control of the ECU in the vehicle according to only the TLS protocol.

In some other embodiments, the vehicle may perform security verification on an out-of-vehicle diagnostic device based on a 27 secure access service, and allow the out-of-vehicle diagnostic device to access a target ECU when the security verification succeeds. The 27 secure access service is a service that provides a protection mechanism based on a 27 service seed and a key. For example, as shown in FIG. 2, when the diagnostic device wants to access the target ECU, the diagnostic device may request a 27 service seed (seed) from the target ECU. The target ECU may generate the 27 service seed (for example, according to an algorithm like a random generation algorithm) and send the 27 service seed to the diagnostic device. Then, the diagnostic device and the target ECU may separately calculate a key (key) based on the 27 service seed according to a security algorithm. The target ECU may perform security verification on an access request of the diagnostic device by comparing a key (for example, a key B) obtained through calculation by the target ECU with a key (for example, a key A) obtained through calculation by the diagnostic device. For example, when the two keys are the same, the security verification on the diagnostic device succeeds. When the two keys are different, the security verification on the diagnostic device fails.

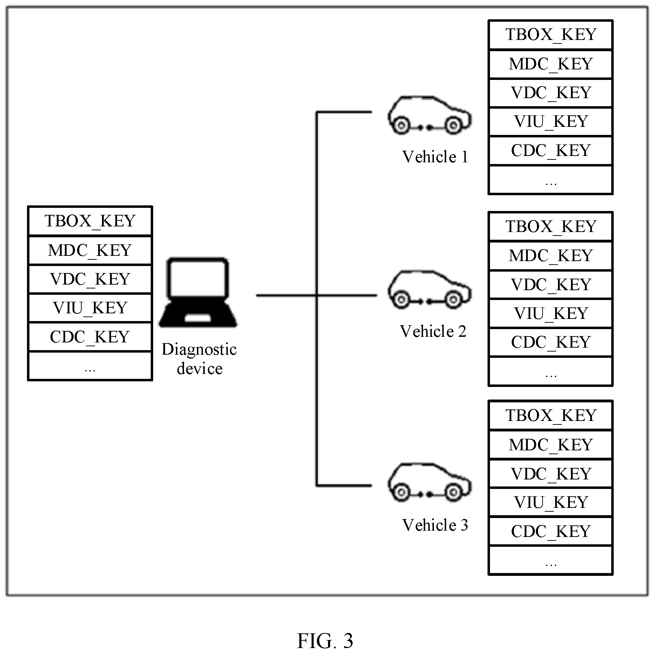

However, in embodiments, as shown in FIG. 3, the diagnostic device stores keys of all ECUs accessed by the diagnostic device. Keys (for example, 27 service keys) of ECUs of a same type in a vehicle model are usually the same. Therefore, if a 27 service seed or a key (for example, TBOX_KEY, MDC_KEY, VDC_KEY, VIU_KEY, CDC_KEY, or the like shown in FIG. 3) of a target ECU in a vehicle model obtained by the diagnostic device is leaked, the entire vehicle model may be affected. In addition, in embodiments, the diagnostic device has 27 service seeds or keys of various types of ECUs in various vehicle models. Therefore, once a 27 service seed or a key of a vehicle model is leaked, all vehicle models may be affected, and an impact range is large. In addition, because diagnostic devices are usually used in after-sales service stores in various places in a country, management is difficult, and the diagnostic devices are more likely to be maliciously attacked.

To resolve the foregoing problems in the conventional security verification mechanism used when the diagnostic device accesses the ECU, and improve data security and vehicle security in a process in which the diagnostic device accesses the vehicle, embodiments of this application provide a secure access method. In some embodiments, when a diagnostic device needs to access a vehicle (denoted as a "target vehicle"), the diagnostic device may send an access request to the vehicle, and uses the access request to carry a temporal key, a device security certificate, or the like indicating a valid binding relationship between the diagnostic device and the target vehicle. The target vehicle may allow the diagnostic device to access the target vehicle after security verification performed, based on the temporal key or the device security certificate, on permission of the diagnostic device to access the vehicle succeeds. In view of this, performing authorization management and the security verification between the diagnostic device and the vehicle can avoid impact of a security hazard in one vehicle to another vehicle.

In some embodiments, a module or an apparatus (denoted as a "first apparatus") configured to isolate the diagnostic device from the ECU may be disposed in the vehicle. When the diagnostic device needs to access an ECU (denoted as a "target ECU") in the target vehicle, the diagnostic device may send an access request to the first apparatus in the target vehicle. The first apparatus may initiate a security verification request to the target ECU based on an indication of the diagnostic device, allow the diagnostic device to access the target ECU in the target vehicle when security verification performed on the first apparatus by the target ECU succeeds, and participate in, as an intermediate device, subsequent data transmission between the diagnostic device and the target ECU. In view of this, because security verification for accessing the ECU is performed inside the vehicle, the isolation function provided by the first apparatus may make a key of the ECU in the vehicle invisible to the diagnostic device. Therefore, leakage of the key of the ECU in the vehicle can be avoided, and further, impact on security of the target vehicle and another vehicle can be avoided.

In some embodiments, when the diagnostic device needs to access the target ECU in the target vehicle, the diagnostic device may send the access request to the vehicle, where the access request carries the temporal key, the device security certificate, or the like indicating the valid binding relationship between the diagnostic device and the target vehicle. After the security verification performed, based on the temporal key or the device security certificate, on the permission of the diagnostic device to access the vehicle succeeds, the target vehicle may initiate a security verification request to the target ECU, allow the diagnostic device to access the target ECU in the target vehicle when security verification performed on the first apparatus by the target ECU succeeds, and participate in, as an intermediate device, subsequent data transmission between the diagnostic device and the target ECU. In view of this, performing authorization management and first security verification between the diagnostic device and the vehicle can avoid impact of a security hazard in one vehicle to another vehicle. In addition, the isolation function provided by the first apparatus makes the key of the ECU in the vehicle invisible to the diagnostic device. Therefore, leakage of the key of the ECU in the vehicle can be avoided, and further, impact on security of the target vehicle and another vehicle can be avoided.

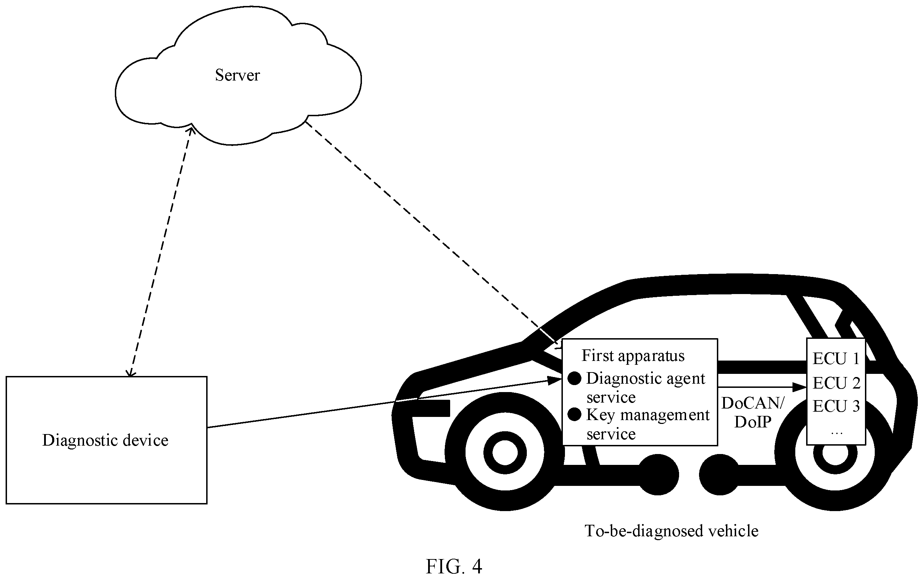

In a possible example, refer to FIG. 4. FIG. 4 is a diagram of an architecture of a system according to an embodiment of this application. As shown in FIG. 4, the security verification system may include a diagnostic device, a security server (referred to as a "server" below), and a to-be-diagnosed vehicle (namely, a target vehicle).

In an example, the diagnostic device shown in FIG. 4 may be a diagnostic instrument, a diagnostic server, a diagnostic server cluster, or the like. This is not specifically limited in embodiments of this application. In embodiments of this application, the diagnostic device may initiate, in response to an operation of triggering access to the target ECU in the to-be-diagnosed vehicle, a request for accessing a target ECU in the to-be-diagnosed vehicle.

An occasion on which the diagnostic device initiates the request for accessing the target ECU in the to-be-diagnosed vehicle may include but is not limited to the following phases: a development phase, an experiment phase, a component production phase, a vehicle assembly phase, an end of line (end of line, EOL) phase, and an after-sales phase. In the foregoing phases, the after-sales phase is a phase after the vehicle is delivered, and the other phases are phases before the vehicle is delivered. Embodiments of this application do not limit a specific phase in which the diagnostic device initiates the request for accessing the target ECU in the to-be-diagnosed vehicle. In addition, embodiments of this application do not limit a specific purpose of the diagnostic device to initiate the request for accessing the target ECU in the to-be-diagnosed vehicle. For example, the purpose may include but is not limited to one or more of the following: problem diagnosis, issue resolution, or software upgrade. For example, the problem diagnosis is, for example, trouble code obtaining capability diagnosis, input/output control capability diagnosis, secure access function diagnosis, data obtaining function diagnosis, program control function diagnosis and refresh function diagnosis, ECU initialization diagnosis, fault self-detection and diagnosis when an ECU is turned off, continuous fault self-detection and diagnosis when an ECU is turned off, and the like. The issue resolution is, for example, resolution of an issue at a diagnosis point. The software upgrade is, for example, system upgrade, function upgrade, or the like. This is not specifically limited.

The server shown in FIG. 4 is configured to manage a security authorization file, for example, including but not limited to vehicle-cloud signature, authorization expiration time (for example, a validity period of a temporal key or a device security certificate), an authorized vehicle VIN (for example, a VIN in the device security certificate), an enabled/disabled state of a related function, and the like.

In some embodiments of this application, the server may be further configured to perform temporal key provisioning and management. For example, the server may provide the diagnostic device with a temporal key (for example, an ephemeral symmetric key) used to access the to-be-diagnosed vehicle.

In some embodiments of this application, the server may be further configured to perform device security certificate provisioning and management. For example, the server may provide the diagnostic device with a device security certificate used to access the to-be-diagnosed vehicle.

The to-be-diagnosed vehicle shown in FIG. 4 may include one or more ECUs (in FIG. 4, for example, the to-be-diagnosed vehicle includes an ECU 1, an ECU 2, and an ECU 3). The ECU includes but is not limited to one or more of the following: a vehicle-mounted sensor, a vehicle-mounted camera, a pre-mounted intelligent gateway (for example, a telematics box (telematics box, T-Box)), a vehicle-mounted gateway, a distribution unit (for example, a power distribution unit (power distribution unit, PDU)), a battery management system (for example, a battery management system, BMS), a thermal management system, a domain controller, and the like. The domain controller may be divided into several domains (also referred to as "function domains") based on functions of parts of the vehicle, for example, into an intelligent driving domain, a cockpit domain, a chassis domain, a power domain, and a body domain. In view of this, the in-vehicle domain controller may include but is not limited to any one or more of the following: an intelligent driving domain controller, a cockpit domain controller, a chassis domain controller, a power domain controller, a body domain controller, and the like. The target ECU in embodiments of this application may be any one of the foregoing ECUs. This is not specifically limited.

In embodiments of this application, the to-be-diagnosed vehicle shown in FIG. 4 may be a vehicle having a key verification function. For example, as shown in FIG. 4, a module or an apparatus that is configured to provide a diagnostic agent service and a key management service may be disposed in the to-be-diagnosed vehicle. In FIG. 4, for example, a first apparatus provides the diagnostic agent service and the key management service. The diagnostic agent service may include but is not limited to services such as an authorization file processing service, a temporal key storage and calculation service, and a 27 service key agent service. The key management service may include but is not limited to an in-vehicle key storage and calculation service. The in-vehicle key storage and calculation service is, for example, storage of a key of an in-vehicle ECU and related calculation such as MAC calculation. The authorization file processing service is, for example, signature check, authorization time check, VIN check, enabling/disabling, temporal key decryption and storage, and the like. The 27 service key agent service is, for example, 0x27 diagnostic service filtering, symmetric key verification, in-vehicle key verification, component unlocking, or the like.

In some embodiments of this application, the first apparatus may be connected to one or more ECUs according to a transmission control protocol/internet protocol (transmission control protocol/internet protocol, TCP/IP) protocol, for example, communicate with the one or more ECUs through a DoIP (diagnostic over IP) packet, to support a related process like ECU diagnosis.

In some embodiments of this application, the first apparatus may be connected to one or more ECUs through a controller area network (controller area network, CAN) bus, for example, communicate with the one or more ECUs through a DoCAN (diagnostic over CAN) packet, to support a related process like ECU diagnosis.

It should be noted that the architecture shown in FIG. 4 is merely an example. In an actual application, specific modules that provide the diagnostic agent service and the key management service are not limited in embodiments of this application. For example, the diagnostic agent service and the key management service may alternatively be provided by different modules. For example, the vehicle may include a diagnostic agent module (namely, the first apparatus) and a key management module. The diagnostic agent module is configured to provide the diagnostic agent service, and the key management module is configured to provide the key management service. For another example, the diagnostic agent service or the key management service may be provided by another module different from the diagnostic agent module. This is not specifically limited.

In addition, in an actual application, a specific structure of the module that provides the diagnostic agent service and the key management service is not limited in embodiments of this application. For example, the module that provides the diagnostic agent service and the key management service may be a hardware module, a component, or an apparatus, or may be a chip.

In embodiments of this application, the diagnostic agent module may initiate, through a wired connection (for example, a diagnostic cable) or a wireless connection to a diagnostic interface of the to-be-diagnosed vehicle, a request for accessing the target ECU in the to-be-diagnosed vehicle. The diagnostic interface may be a unified diagnostic service (unified diagnostic service, UDS) interface, or may be an on board diagnostics (on board diagnostics, OBD) interface, or may be another interface that can implement a command transmission function. This is not limited. When vehicle diagnosis is implemented in a wireless manner, the diagnostic device and the to-be-diagnosed vehicle may have near field communication functions such as a Bluetooth function or a wireless local area network (wireless local area network, WLAN) function. Diagnosis personnel may first connect the diagnostic device and the to-be-diagnosed vehicle through the near field communication functions of the diagnostic device and the to-be-diagnosed vehicle, and then input a diagnosis command on the diagnostic device, so that the diagnosis command is transmitted to the to-be-diagnosed vehicle in a wireless manner. In some examples, a display may be further disposed on the diagnostic device. After obtaining a diagnosis result, the diagnostic device may further display the diagnosis result to the diagnosis personnel through the display, to prompt the diagnosis personnel to view the diagnosis result in time, so as to quickly find a fault location, a fault cause, and the like.

It should be understood that FIG. 4 in this application is merely an example. A quantity of to-be-diagnosed vehicles and a quantity of diagnostic devices in the system architecture are not limited in embodiments of this application. For example, one diagnostic device may exchange information with only one to-be-diagnosed vehicle, or may exchange information with a plurality of to-be-diagnosed vehicles. In addition, one to-be-diagnosed vehicle may exchange information with a plurality of diagnostic devices. In addition, the system architecture to which embodiments of this application are applicable may further include another device, for example, a supplier device, a manufacturer device, a production line device, or a sales device, in addition to the to-be-diagnosed vehicle, the diagnostic device, and the server shown in FIG. 4. This is not limited in embodiments of this application either. In addition, the diagnostic device in embodiments of this application may integrate all functions into one independent physical device, or may distribute the functions on a plurality of independent physical devices. This is not limited in embodiments of this application either.

It should be noted that the secure access method in embodiments of this application may be applied to the intelligent driving field, for example, a vehicle to everything (vehicle to everything, V2X) field, a long term evolution-vehicle (long term evolution-vehicle, LTE-V) field, or a vehicle to vehicle (vehicle to vehicle, V2V) field. For example, the secure access method may be applied to a vehicle having a key verification function, or another apparatus having a key verification function in a vehicle, for example, a vehicle-mounted terminal, a vehicle-mounted controller, a vehicle-mounted module, a vehicle-mounted assembly, a vehicle-mounted component, a vehicle-mounted chip, a vehicle-mounted unit, or another sensor like a vehicle-mounted radar or a vehicle-mounted camera. Certainly, the secure access method in embodiments of this application may be further applied to an intelligent terminal that has a key verification function other than a vehicle, or disposed in an intelligent terminal that has a key verification function other than a vehicle, or disposed in a component of the intelligent terminal. The intelligent terminal may include but is not limited to an intelligent transportation device, a smart home device, a robot, or the like. For example, the intelligent terminal includes but is not limited to an intelligent terminal, or a controller, a chip, another sensor like a radar or a camera, or another component in an intelligent terminal. The following embodiments are described by using the intelligent driving field as an example.

The following describes in detail a secure access method provided in embodiments of this application by using an example in which a target vehicle includes a first apparatus configured to provide a diagnostic agent service and with reference to three specific embodiments (for example, Embodiment 1, Embodiment 2, and Embodiment 3).

### Embodiment 1:

In Embodiment 1, when receiving an access request from a diagnostic device for requesting to access a target ECU in a target vehicle, a first apparatus in the target vehicle performs first security verification between the first apparatus and the diagnostic device based on first information carried in the access request, requests the target ECU to perform second security verification between the target ECU and the first apparatus after the first security verification succeeds, allows the diagnostic device to access the target ECU in the target vehicle after the second security verification succeeds, and participates in, as an intermediate device, subsequent data transmission between the diagnostic device and the target ECU. The first information may indicate a valid binding relationship between the diagnostic device and the target vehicle. For example, the first information may include but is not limited to a temporal key and a device security certificate. In an example, the first information is information that is obtained by the diagnostic device from a server and that is used for security verification.

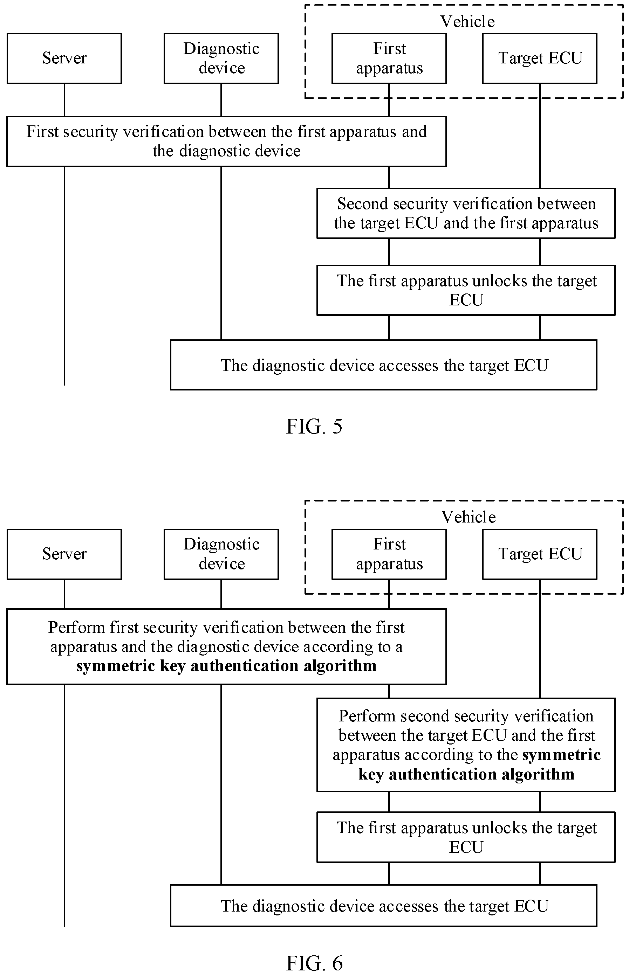

In an example, refer to FIG. 5. FIG. 5 is a diagram of a secure access process according to an embodiment of this application, taking a case in which the diagnostic device accesses the target ECU in the vehicle in the intelligent driving field in the system architecture shown in FIG. 4 as an example. As shown in FIG. 5, when the diagnostic device needs to access the target ECU in the vehicle, the first apparatus in the vehicle may perform the first security verification between the first apparatus and the diagnostic device. In this process, the first security verification may be performed based on the first information sent by the server to the diagnostic device. After the first security verification succeeds, the target ECU may perform the second security verification between the target ECU and the first apparatus. After the second security verification succeeds, the first apparatus may unlock the target ECU. Then, the diagnostic device may successfully access the target ECU.

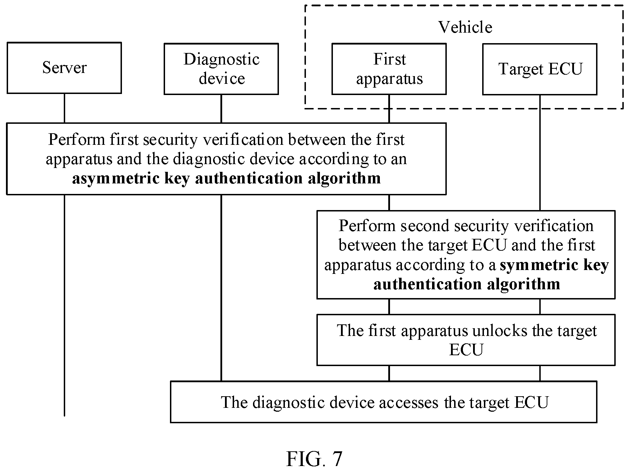

In some embodiments, when the first apparatus performs the first security verification between the first apparatus and the diagnostic device, the first apparatus may perform the first security verification according to a symmetric key authentication algorithm shown in FIG. 6, or may perform the first security verification according to an asymmetric key authentication algorithm shown in FIG. 7, or may perform the first security verification according to another security authentication algorithm. This is not specifically limited in embodiments of this application.

In some embodiments, when the target ECU performs the second security verification between the target ECU and the first apparatus, the target ECU may perform the second security verification according to the symmetric key authentication algorithm shown in FIG. 6 or FIG. 7, or may perform the second security verification according to the another security authentication algorithm. This is not specifically limited in embodiments of this application.

The symmetric key authentication algorithm means that a key used for decryption and a key used for encryption are the same, and both a transmitter and a receiver know keys and encryption and decryption algorithms in advance, and the keys are the same. The asymmetric key authentication algorithm means that a key used for decryption and a key used for encryption are different. For example, a public key and a private key may be used together for encryption and decryption. For example, a transmitter and a receiver may agree on obtaining a group of keys in advance, and send respective public keys to each other. When sending data to the receiver, the transmitter may use a public key of the receiver to encrypt the data and then send the encrypted data to the receiver. Correspondingly, the receiver uses a private key of the receiver to decrypt the received data encrypted by using the public key, to obtain the data.

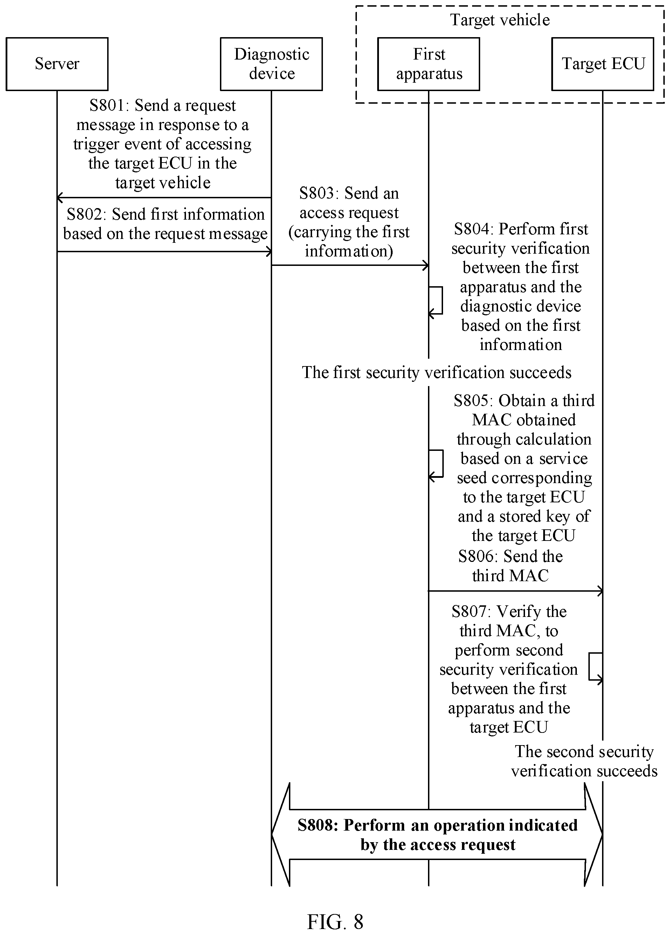

Refer to FIG. 8. FIG. 8 is a flowchart of a secure access method according to an embodiment of this application. As shown in FIG. 8, the secure access method provided in this embodiment of this application may be implemented based on S801 to S808 shown in FIG. 8.

S801: A diagnostic device sends a request message to a server in response to a trigger event of accessing a target ECU in a target vehicle.

For example, the request message sent by the diagnostic device (for example, a first diagnostic device) to the server may be a request message for accessing a vehicle (namely, a target vehicle, for example, a first vehicle) in which the target ECU (for example, a first ECU) is located.

In an example, the trigger event of accessing the target ECU may be a manually triggered operation, for example, an operation manually triggered by diagnostic personnel, or may be an event automatically triggered by the diagnostic device when a preset trigger condition is met. This is not specifically limited in embodiments of this application.

In embodiments of this application, the diagnostic device may be a device outside the vehicle, for example, may be another device independent of an original equipment manufacturer (original equipment manufacturer, OEM) device and a supplier device, or may be a part of an OEM device or a part of a supplier device. This is not specifically limited.

In an example, an occasion on which the diagnostic device in embodiments of this application sends the request message to the server in response to the trigger event of accessing the target ECU may be before the vehicle is delivered, or may be after the vehicle is delivered. This is not specifically limited.

In an example, an objective of accessing the target ECU may be but is not limited to performing problem diagnosis, issue resolution, or software upgrade on the target ECU. For example, the diagnostic device may perform, in response to an operation of accessing the target ECU, the problem diagnosis on the target ECU by reading data in the target ECU, and perform the issue resolution or the software upgrade on the target ECU by modifying the data in the target ECU and/or writing data into the target ECU.

In an example, the problem diagnosis in embodiments of this application may include but is not limited to trouble code obtaining capability diagnosis, input/output control capability diagnosis, secure access function diagnosis, data obtaining function diagnosis, program control function diagnosis and refresh function diagnosis, ECU initialization diagnosis, fault self-detection and diagnosis when an ECU is turned off, continuous fault self-detection and diagnosis when an ECU is turned off, and the like. The issue resolution may include but is not limited to resolution of an issue at a diagnosis point. The software upgrade may include but is not limited to system upgrade, function upgrade, or the like. This is not specifically limited.

S802: The server sends first information to the diagnostic device based on the request message.

In embodiments of this application, the first information is used by the target vehicle to perform security verification on the diagnostic device. For example, the first information is used by a first apparatus in the target vehicle to perform first security verification between the first apparatus and the diagnostic device when the diagnostic device requests to access the target ECU. Essence of the first security verification is out-of-vehicle security verification. Whether the diagnostic device can access the target vehicle legitimately may be determined through the first security verification.

In an example, the first information may indicate a valid binding relationship between the diagnostic device and the target vehicle. For example, the first apparatus may determine, based on the first information, that the diagnostic device is allowed to access the target vehicle.

In some embodiments, the first information may indicate a temporal key, for example, an ephemeral symmetric key. It may be understood that, compared with a conventional security key like a long-term key, the temporal key may be used to resolve security impact caused by leakage of the conventional security key like the long-term key on a control module due to a specific temporary nature of the temporal key (for example, the temporal key expires after a specific time period). In view of this, due to a risk of key leakage, the server may improve data security and vehicle security in a process in which the diagnostic device accesses the control module by allocating the temporal key to the diagnostic device.

In an example, the temporal key may correspond to an application scope and a validity period. For example, the application scope corresponding to the temporal key may be configured by the server based on the target ECU to be accessed by the diagnostic device. For example, the application scope of the temporal key may be the target ECU or the target vehicle in which the target ECU is located. The validity period corresponding to the temporal key may be configured by the server based on an actual situation like a security management and control level and a priority. For example, the validity period may be 12 hours, 24 hours, or the like. This is not specifically limited.

In an example, the first information may be a 27 service key. Certainly, a specific key type of the temporal key is not specifically limited in embodiments of this application.

In some embodiments, the first information may be a device security certificate. It may be understood that, compared with the conventional security key like the long-term key, a manner of presetting a root certificate of the diagnostic device can help the server manage permission of a group of diagnostic devices to access the ECU/vehicle, to provide finer-grained security control in a data access process. Therefore, a security risk caused by leakage of the conventional security key like the long-term key can be eliminated. In addition, a solution in which the server manages, by presetting the root certificate of the diagnostic device, the permission of the diagnostic device to access the ECU/vehicle can further implement more rapid and secure distribution of authorization information, and is applicable to a wider range of scenarios, for example, applicable to an entry-level device or component without a symmetric system, for example, a BMS or an electric power steering (electric power steering, EPS) system, applicable to an authentication 29 service standard, or the like.

In an example, the device security certificate may correspond to an application scope and a validity period. For example, the application scope corresponding to the device security certificate may be configured by the server based on the target ECU to be accessed by the diagnostic device. For example, the application scope of the device security certificate may be the target ECU or the target vehicle in which the target ECU is located. The validity period corresponding to the device security certificate may be configured by the server based on an actual situation like a security management and control level and a priority. For example, the validity period may be 12 hours, 24 hours, or the like. This is not specifically limited.

Certainly, the first information may alternatively be other information that is provided by the server to the diagnostic device and that is used for security verification. This is not specifically limited in embodiments of this application.

In some embodiments, the first information sent by the server to the diagnostic device may be encrypted first information, for example, first information encrypted in a first encryption manner. The first information encrypted in the first encryption manner is directly carried in the access request when the diagnostic device sends the access request to the target vehicle, to prevent the temporal key, the device security certificate, or the like indicated by the first information from being maliciously tampered with. In addition, the server sends a first decryption manner to the target vehicle, where the first decryption manner corresponds to the first encryption manner, and the first decryption manner is used by the target vehicle to decrypt the first information when the target vehicle receives the first information encrypted in the first encryption manner. In addition, the server sends fourth information that is encrypted in a second encryption manner to the diagnostic device, and sends a second decryption manner corresponding to the second encryption manner to the diagnostic device, for the diagnostic device to decrypt the fourth information when the diagnostic device receives the fourth information that is encrypted in the second encryption manner. Information (for example, a temporal key) obtained by decrypting the fourth information is used to participate in security verification (for example, the first security verification) when the diagnostic device accesses the target vehicle.

For example, the first encryption manner is a Prek encryption manner, and the second encryption manner is a PK encryption manner.

S803: The diagnostic device sends the access request to the first apparatus in the target vehicle, where the access request carries the first information.

The access request carries an identifier of the target ECU in the target vehicle, and the access request is used to request to access the target ECU in the target vehicle. An objective of requesting, by the diagnostic device, to access the target ECU may include but is not limited to reading data in the target ECU, modifying the data in the target ECU, writing data into the target ECU, and the like.

In some embodiments, the first information received by the diagnostic device from the server is the encrypted first information, for example, the first information encrypted in the first encryption manner. The diagnostic device may send, to the first apparatus, the access request carrying the first information encrypted in the first encryption manner. Generally, if the first information received by the diagnostic device from the server is the first information encrypted in the first encryption manner, the diagnostic device further receives the fourth information from the server. The fourth information is the same as information (for example, the temporal key) indicated by the first information. The fourth information is used to participate in security verification (for example, the first security verification) performed when the diagnostic device accesses the target vehicle. A difference between the fourth information and the first information is that the first information is encrypted in the first encryption manner.

In some embodiments, the fourth information received by the diagnostic device from the server is obtained through encryption, for example, in the second encryption manner. In this case, the diagnostic device may decrypt the fourth information in the second decryption manner that corresponds to the second encryption manner and that is indicated by the server, to obtain the information in the fourth information, for example, the temporal key.

S804: The first apparatus performs the first security verification between the first apparatus and the diagnostic device based on the first information.

The first security verification is preliminary verification on permission of the diagnostic device, for example, verification on the permission of the diagnostic device to access the target vehicle. The first security verification may be used to determine whether the diagnostic device can access the target vehicle legitimately.

In some embodiments, the first apparatus may perform, according to the symmetric key authentication algorithm, the first security verification between the first apparatus and the diagnostic device based on the first information. For example, it is assumed that the first information carried in the access request is an ephemeral symmetric key, for example, a 27 service key. The first apparatus may verify the ephemeral symmetric key according to the symmetric key authentication algorithm, to perform the first security verification between the first apparatus and the diagnostic device.

In an example, the symmetric key authentication algorithm in embodiments of this application may include but is not limited to any one of the following: an advanced encryption standard (advanced encryption standard, AES) algorithm, a data encryption standard (data encryption standard, DES) algorithm, a triple DES (triple DES, 3DES) algorithm, and the like. For example, the AES algorithm is, for example, an AES-cipher-based message authentication code (AES-cipher-based message authentication code, AES-CMAC) algorithm, an AES-cipher block chaining (AES-cipher block chaining, AES-CBC) algorithm, or an AES-GMAC CTR mode (AES-GMAC CTR mode, AES-GCM) algorithm.

In some embodiments, the access request is used to access the target ECU in the target vehicle. In this case, in a possible implementation, when verifying the ephemeral symmetric key according to the symmetric key authentication algorithm, the first apparatus may obtain a service seed (for example, a 27 service seed) from the target ECU based on the identifier that is of the target ECU and that is carried in the access request, and send the service seed to the diagnostic device. Then, the first apparatus may obtain a first MAC through calculation based on a service key and the service seed, and receive a second MAC obtained by the diagnostic device through calculation based on the service key and the service seed. Finally, the first apparatus verifies the ephemeral symmetric key by verifying whether the second MAC is the same as the first MAC.

In an example, the service seed (for example, the 27 service seed) may be an ephemeral service seed randomly generated by the target ECU, for example, an ephemeral service seed generated according to an algorithm like a random generation algorithm.

In some embodiments, the first apparatus may perform, according to the asymmetric key authentication algorithm, the first security verification between the first apparatus and the diagnostic device based on the first information. For example, it is assumed that the first information carried in the access request is a device security certificate, for example, a 29 service certificate. The first apparatus may verify the device security certificate according to the asymmetric key authentication algorithm, to perform the first security verification between the first apparatus and the diagnostic device.

In an example, the asymmetric key authentication algorithm in embodiments of this application may include but is not limited to any one of the following: an RSA algorithm, a digital signature arithmetic (digital signature arithmetic, DSA), an elliptic curve cryptography (elliptic curve cryptography, ECC) algorithm, or the like.

In a possible implementation, when verifying the device security certificate according to the asymmetric key authentication algorithm, the first apparatus may first verify validity of the device security certificate (for example, the 29 service certificate). When the validity verification succeeds (for example, the device security certificate is valid), the first apparatus verifies whether an identification number carried in the device security certificate is consistent with a vehicle identification number in a root certificate stored in the first apparatus. For example, when the identification number (for example, a VIN) carried in the device security certificate includes the vehicle identification number (for example, the VIN) in the root certificate, the first apparatus may determine that the verification of the device security certificate succeeds, that is, the first security verification succeeds. When the identification number carried in the device security certificate does not include the vehicle identification number in the root certificate, the first apparatus may determine that the verification of the device security certificate fails, that is, the first security verification fails.

S805: When the first security verification succeeds, the first apparatus obtains a third MAC obtained through calculation based on the service seed corresponding to the target ECU and a stored key of the target ECU.

In some embodiments, the first apparatus may provide a diagnostic agent service and a key management service. In this case, the first apparatus may invoke the key management service to obtain the stored key (for example, a target ECU key) of the target ECU, and then obtain the third MAC through calculation based on the key of the target ECU and the service seed (for example, the 27 service seed) corresponding to the target ECU.

In some other embodiments, the first apparatus does not provide the key management service, and the key management service is provided by another module or apparatus, for example, provided by a key management module. In this case, the first apparatus may send the service seed corresponding to the target ECU to the key management module, and request the key management module to perform MAC calculation. The key management module may invoke the key management service to obtain the stored key (for example, the target ECU key) of the target ECU, obtain the third MAC through calculation based on the key of the target ECU and the service seed (for example, the 27 service seed) corresponding to the target ECU, and then send the third MAC to the first apparatus.

The key management service may be used to store an in-vehicle key (for example, a key of an ECU) and perform related calculation (for example, MAC calculation). For example, one ECU in a vehicle corresponds to one ECU key. It should be noted that the in-vehicle key (for example, the key of the ECU) in embodiments of this application is invisible to the diagnostic device. In view of this, there is no risk of leakage of a key of an ECU in the target vehicle. In other words, the diagnostic device cannot obtain and store a key of an ECU in a vehicle, to avoid impact on security of the target vehicle and another vehicle.

In some embodiments, the service seed corresponding to the target ECU may be obtained by the first apparatus from the target ECU before the first security verification is performed. For example, when the first apparatus receives the ephemeral symmetric key (for example, the 27 service key) from the diagnostic device, the first apparatus may obtain the service seed (for example, the 27 service seed) from the target ECU based on the identifier of the target ECU carried in the access request.

In some embodiments, the service seed corresponding to the target ECU may be obtained by the first apparatus from the target ECU after the first security verification succeeds. For example, after the first apparatus performs the first security verification on the diagnostic device based on the device security certificate from the diagnostic device according to the asymmetric key authentication algorithm and the verification succeeds, the first apparatus may obtain the service seed (for example, the 27 service seed) from the target ECU based on the identifier of the target ECU carried in the access request.

In some embodiments, if the first security verification fails, the first apparatus may reject the access request of the diagnostic device. For example, it is assumed that the first information indicates that there is no valid binding relationship between the diagnostic device and the target vehicle. The first apparatus may consider that the target vehicle does not allow access of the diagnostic device. In this case, the first apparatus may send, to the diagnostic device, a feedback message indicating that the target vehicle does not allow the diagnostic device to access the target ECU.

S806: The first apparatus sends the third MAC to the target ECU.

In an example, the first apparatus may send the third MAC to the target ECU based on the identifier of the target ECU carried in the access request.

S807: The target ECU verifies the third MAC, to perform second security verification between the first apparatus and the target ECU.

The second security verification is verification on permission of the first apparatus, for example, verification on permission of the first apparatus to unlock the target ECU. Whether the first apparatus can unlock the target ECU legitimately may be determined through the second security verification.

In some embodiments, a first control module may perform the second security verification according to the symmetric key authentication algorithm. In an example, when the second security verification is performed according to the symmetric key authentication algorithm, the target ECU may obtain a fourth MAC through calculation based on the key of the target ECU and the service seed (for example, the 27 service seed) corresponding to the target ECU, and then verify whether the fourth MAC is the same as the third MAC. For example, when the fourth MAC is the same as the third MAC, the target ECU may determine that the second security verification succeeds; or when the fourth MAC is different from the third MAC, the target ECU may determine that the second security verification fails.

S808: After the second security verification succeeds, the target ECU performs an operation indicated by the access request.

In an example, after the second security verification succeeds, the first apparatus may unlock the target ECU, so that the diagnostic device can successfully access the target ECU.

In an example, that the target ECU performs the operation indicated by the access request may include but is not limited to one or more of the following: sending target data in the target ECU to the diagnostic device, accepting modification of data in the target ECU by the diagnostic device, and accepting writing of data into the target ECU by the diagnostic device.

When sending the target data in the target ECU to the diagnostic device, the target ECU may directly send the target data to the diagnostic device, or may indirectly send the target data to the diagnostic device through the first apparatus. This is not specifically limited. Similarly, when the modification of the data in the target ECU by the diagnostic device is accepted or writing of the data into the target ECU by the diagnostic device is accepted, the diagnostic device may directly modify the data in the target ECU/directly write the data into the target ECU, or may indirectly modify the data in the target ECU/indirectly write the data into the target ECU through the first apparatus. This is not specifically limited.

In some embodiments, if the second security verification fails, the first apparatus may reject the access request of the diagnostic device. For example, the first apparatus may send, to the diagnostic device, the feedback message indicating that the target vehicle does not allow the diagnostic device to access the target ECU.

Similar to the process shown in FIG. 8, when the diagnostic device (for example, the first diagnostic device) needs to access another ECU (for example, a second ECU, where the second ECU is different from the first ECU) in the target vehicle (for example, the first vehicle), a similar method may be used. First, first security verification between the first apparatus and the first diagnostic device is performed, and then second security verification between the first apparatus and the second ECU is performed. When both the first security verification and the second security verification succeed, the diagnostic device is allowed to access the second ECU. For example, when the diagnostic device needs to access the second ECU in the first vehicle, the diagnostic device may request, from the server, second information used for the first security verification, and send, to the first apparatus, an access request (for example, a second access request) that carries the second information and that is used to request to access the second ECU. When receiving the second access request from the first diagnostic device, the first apparatus performs the first security verification between the first apparatus and the first diagnostic device based on the second information carried in the second access request (where, for example, the second information indicates a valid binding relationship between the first diagnostic device and the first vehicle). For example, the first security verification is performed according to the symmetric key authentication algorithm or the asymmetric key authentication algorithm, depending on specific content of the second information. For example, the second information may be a temporal key or a device security certificate. After the first security verification succeeds, the first apparatus may request the second ECU to perform the second security verification between the second ECU and the first apparatus, for example, perform the second security verification according to the symmetric key authentication algorithm. Further, when the second security verification succeeds, the first apparatus allows the first diagnostic device to access the second ECU in the target vehicle, and participates in, as an intermediate device, subsequent data transmission between the first diagnostic device and the second ECU.

In some embodiments, the second information is the same as the first information. In other words, the first information allocated by the server to the first diagnostic device is used by the first diagnostic device to access the first vehicle. First security verification performed on the first diagnostic device by another vehicle cannot succeed based on the first information. Therefore, the first diagnostic device cannot successfully access the another vehicle based on the first information. Alternatively, even if a third party obtains the first information, first security verification performed on the third party by the first vehicle or another vehicle cannot succeed based on the first information. Therefore, the third party cannot successfully access the first vehicle or the another vehicle based on the first information. In embodiments, the first information and the second information may be temporal keys or device security certificates.

In some embodiments, the second information is different from the first information. In other words, the first information allocated by the server to the first diagnostic device is used by the first diagnostic device to access the first ECU in the first vehicle. If the first diagnostic device requests to, based on the first information, access another ECU in the first vehicle, first security verification performed on the first diagnostic device by the first vehicle cannot succeed. Therefore, the first diagnostic device cannot successfully access the another ECU in the first vehicle based on the first information. Alternatively, if the first diagnostic device requests to, based on the first information, access an ECU in another vehicle, first security verification on the first diagnostic device performed by the another vehicle cannot succeed. Therefore, the first diagnostic device cannot successfully access the ECU in the another vehicle based on the first information. Alternatively, even if a third party obtains the first information, first security verification performed on the third party by the first vehicle or another vehicle cannot succeed based on the first information. Therefore, the third party cannot successfully access an ECU in the first vehicle or the another vehicle based on the first information. In embodiments, the first information and the second information may be temporal keys.

Alternatively, when another diagnostic device (for example, a second diagnostic device, where the second diagnostic device is different from the first diagnostic device) needs to access an ECU (for example, a third ECU, where the third ECU may be the same as the first ECU, or may be different from the first ECU) in the target vehicle (for example, the first vehicle), a similar method may be used, First, first security verification between the first apparatus and the second diagnostic device is performed, and then second security verification between the first apparatus and the third ECU is performed. When both the first security verification and the second security verification succeed, the diagnostic device is allowed to access the third ECU. For example, when the second diagnostic device needs to access the third ECU in the first vehicle, the second diagnostic device may request, from the server, third information used for the first security verification, and send, to the first apparatus, an access request (for example, a third access request) that carries the third information and that is used to request to access the third ECU. When receiving the third access request from the second diagnostic device, the first apparatus performs the first security verification between the first apparatus and the second diagnostic device based on the third information carried in the third access request (where, for example, the third information indicates a valid binding relationship between the second diagnostic device and the first vehicle). For example, the first security verification is performed according to the symmetric key authentication algorithm or the asymmetric key authentication algorithm, depending on specific content of the third information. For example, the third information may be a temporal key or a device security certificate. After the first security verification succeeds, the first apparatus may request the third ECU to perform the second security verification between the third ECU and the first apparatus, for example, perform the second security verification according to the symmetric key authentication algorithm. Further, when the second security verification succeeds, the first apparatus allows the second diagnostic device to access the third ECU in the target vehicle, and participates in, as an intermediate device, subsequent data transmission between the diagnostic device and the third ECU.

In embodiments, the third information is different from the first information. In other words, the first information allocated by the server to the first diagnostic device is used by the first diagnostic device to access the first vehicle, and the third information allocated by the server to the second diagnostic device is used by the second diagnostic device to access the first vehicle. The second diagnostic device cannot pass, based on the first information, the first security verification performed on the first diagnostic device by the vehicle. Therefore, the first diagnostic device cannot successfully access the vehicle based on the first information. Similarly, the first diagnostic device cannot pass, based on the third information, the first security verification performed on the first diagnostic device by the vehicle. Therefore, the first diagnostic device cannot successfully access the vehicle based on the third information. In embodiments, the first information and the second information may be temporal keys or device security certificates.

Based on the secure access method provided in Embodiment 1 of this application, a first apparatus may provide a diagnosis agent isolation service. When a diagnostic device wants to access a target ECU in a target vehicle, first security verification between the first apparatus and the diagnostic device is performed on the diagnostic device, to preliminarily verify whether the diagnostic device can access the target vehicle legitimately. After the first verification succeeds, the first apparatus may request the target ECU to perform further second security verification between the first apparatus and the target ECU, to verify whether the first apparatus can unlock the target ECU legitimately.

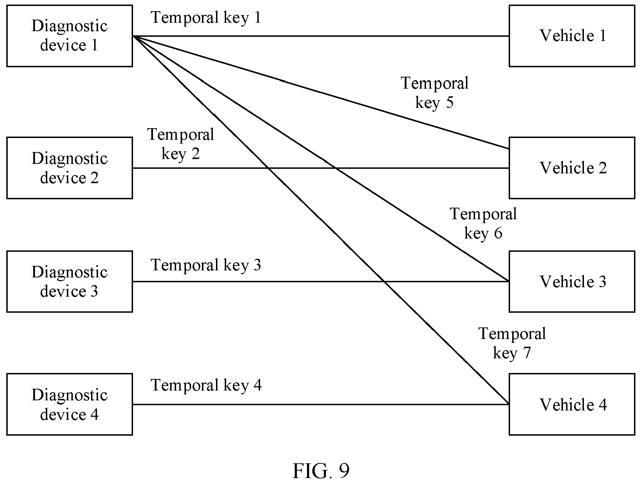

It may be understood that, in this solution, authorization management is performed on a diagnostic device and a vehicle (for example, between one diagnostic device and one vehicle). As shown in FIG. 9, one-to-one authorization in which a diagnostic device 1 uses a temporal key 1 to access a vehicle 1, a diagnostic device 2 uses a temporal key 2 to access a vehicle 2, a diagnostic device 3 uses a temporal key 3 to access a vehicle 3, a diagnostic device 4 uses a temporal key 4 to access a vehicle 4, the diagnostic device 1 uses a temporal key 5 to access the vehicle 2, the diagnostic device 1 uses a temporal key 6 to access the vehicle 3, the diagnostic device 1 uses a temporal key 7 to access the vehicle 4, and the like, and one-to-one first security verification performed by a vehicle on permission of a diagnostic device to access the vehicle can be used to avoid impact of a security hazard in one vehicle to another vehicle. For example, even if a temporal key or a device security certificate used to access a target vehicle is obtained by a third party, because the temporal key or the device security certificate indicates a valid binding relationship between the diagnostic device and the target vehicle, the third party cannot access another vehicle based on the temporal key or the device security certificate. Therefore, security of the another vehicle is not affected.

In addition, an isolation function provided by a first apparatus in the target vehicle can prevent the diagnostic device from obtaining a key of an ECU in the vehicle. In other words, the key (including a key of a target ECU) of the ECU in the vehicle is invisible to the diagnostic device. Therefore, a risk of leakage of the key of the ECU in the target vehicle is eliminated, and further, impact on security of the target vehicle and the another vehicle can be avoided.

In addition, because first information such as a temporal key/a device security certificate usually has a validity period, even if the third party obtains the temporal key/the device security certificate, when the third party maliciously accesses the target vehicle based on the first information, the temporal key/the device security certificate may have been invalid, and therefore, no security impact is caused to the target vehicle. In addition, even if the temporal key/the device security certificate is not invalid, because the temporal key/the device security certificate is issued by the server for the diagnostic device to access the target vehicle, the third party cannot successfully access another vehicle based on the temporal key/the device security certificate. Therefore, security of the another vehicle is not affected.

As described above, the first information in embodiments of this application may be a temporal key, or may be a device security certificate. The following specifically describes the secure access method in Embodiment 1 with reference to an example in which the first information is a temporal key or a device security certificate.

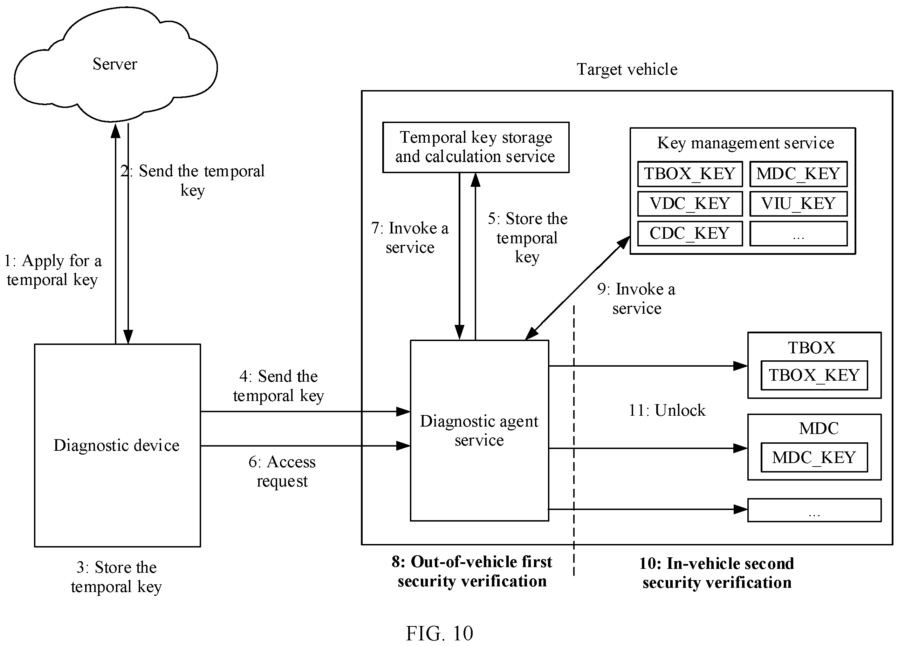

Refer to FIG. 10. FIG. 10 is a diagram of a secure access process according to an embodiment of this application, taking the system architecture shown in FIG. 4 as an example. A diagnostic device shown in FIG. 10 may be the diagnostic device shown in FIG. 8. A diagnostic agent service shown in FIG. 10 may be a service provided by the first apparatus shown in FIG. 8. A key management service shown in FIG. 10 may be a service provided by the first apparatus shown in FIG. 8 or a service provided by another module or apparatus in the vehicle (in the following example, that both the diagnostic agent service and the key management service are provided by the first apparatus is used as an example). The target ECU shown in FIG. 8 may be an ECU like a telematics box (telematics box, T-BOX), a mobile data center (mobile data center, MDC), a vehicle domain controller (vehicle domain controller, VDC), a vehicle integration unit (vehicle integration unit, VIU), or a cockpit domain controller (cockpit domain controller, CDC) shown in FIG. 10.

As shown in FIG. 10, when the diagnostic device needs to access a target ECU in a target vehicle, the diagnostic device may apply to a server for a temporal key (sequence number 1 shown in FIG. 10). When receiving the temporal key allocated by the server (sequence number 2 shown in FIG. 10), the diagnostic device may store the temporal key (sequence number 3 shown in FIG. 10) and send the temporal key to the target vehicle (sequence number 4 shown in FIG. 10), for example, send the temporal key to a diagnostic agent service in the target vehicle. When receiving the temporal key, the diagnostic agent service may store the temporal key in a temporal key storage and calculation service (sequence number 5 shown in FIG. 10). When receiving an access request (for example, for accessing the target ECU) from the diagnostic device (sequence number 6 shown in FIG. 10), the diagnostic agent service may invoke the temporal key storage and calculation service (sequence number 7 shown in FIG. 10), and perform, based on the temporal key, out-of-vehicle first security verification on permission of the diagnostic device to access the target vehicle (sequence number 8 shown in FIG. 10). When the first security verification succeeds, the diagnostic agent service may invoke the key management service (sequence number 9 shown in FIG. 10) to obtain an ECU key, and perform MAC calculation based on the ECU key, to request, from the target ECU, in-vehicle second security verification based on a MAC (sequence number 10 shown in FIG. 10). When the second security verification performed by the target ECU on permission of the diagnostic agent service to access the target ECU succeeds, the diagnostic agent service may unlock the target ECU (sequence number 11 shown in FIG. 10). Then, the diagnostic device may successfully access the target ECU.

It should be noted that a relationship between the temporal key storage and calculation service and the diagnostic agent service shown in FIG. 10 is not limited in embodiments of this application. In some examples, the temporal key storage and calculation service may be a part of the diagnostic agent service. In some other examples, the temporal key storage and calculation service may be independent of the diagnostic agent service and may be invoked by the diagnostic agent service.

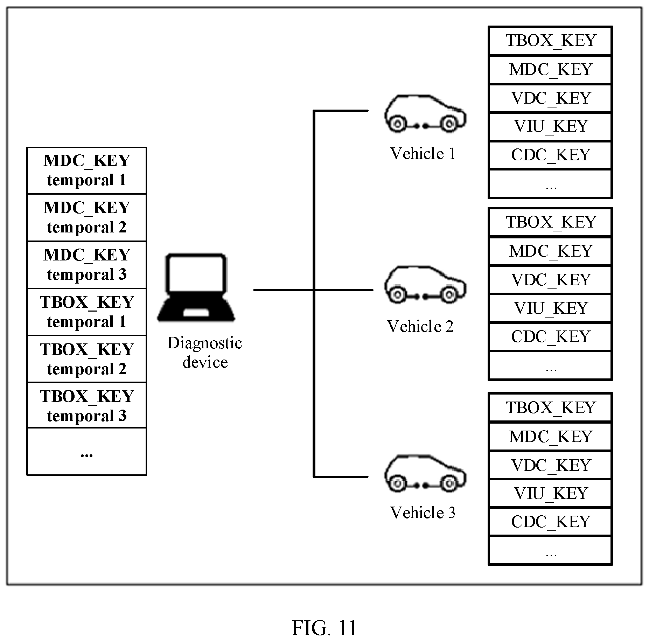

It may be understood that, based on the secure access process shown in FIG. 10, it is assumed that the diagnostic device has accessed a plurality of ECUs in a plurality of vehicles and stores corresponding temporal keys such as MDC_KEY ephemeral 1, MDC_KEY ephemeral 2, MDC_KEY ephemeral 3, TBOX_KEY ephemeral 1, TBOX_KEY ephemeral 2, TBOX_KEY ephemeral 3, and the like shown in FIG. 11. As shown in FIG. 11, MDC_KEY ephemeral 1 is a temporal key that is allocated by the server to the diagnostic device and that is used to access an MDC in a vehicle 1, MDC_KEY ephemeral 2 is a temporal key that is allocated by the server to the diagnostic device and that is used to access an MDC in a vehicle 2, MDC_KEY ephemeral 3 is a temporal key that is allocated by the server to the diagnostic device and that is used to access an MDC in a vehicle 3, TBOX_KEY ephemeral 1 is a temporal key that is allocated by the server to the diagnostic device and that is used to access a TBOX in the vehicle 1, TBOX_KEY ephemeral 2 is a temporal key that is allocated by the server to the diagnostic device and that is used to access a TBOX in the vehicle 2, and TBOX_KEY ephemeral 3 is a temporal key that is allocated by the server to the diagnostic device and that is used to access a TBOX in the vehicle 3. Each temporal key is only used to perform corresponding out-of-vehicle first security verification when one specific vehicle is accessed or one specific ECU in one specific vehicle is accessed. Therefore, even if a third party obtains a temporal key, the third party cannot successfully access another ECU in the vehicle and another vehicle based on the temporal key. Therefore, security of the another ECU in the vehicle and the another vehicle is not affected. In addition, because the temporal key usually has a validity period, even if the third party obtains a temporal key corresponding to a vehicle, when the third party maliciously accesses the vehicle based on the temporal key, the temporal key may have been invalid. Therefore, security of the vehicle is not affected.

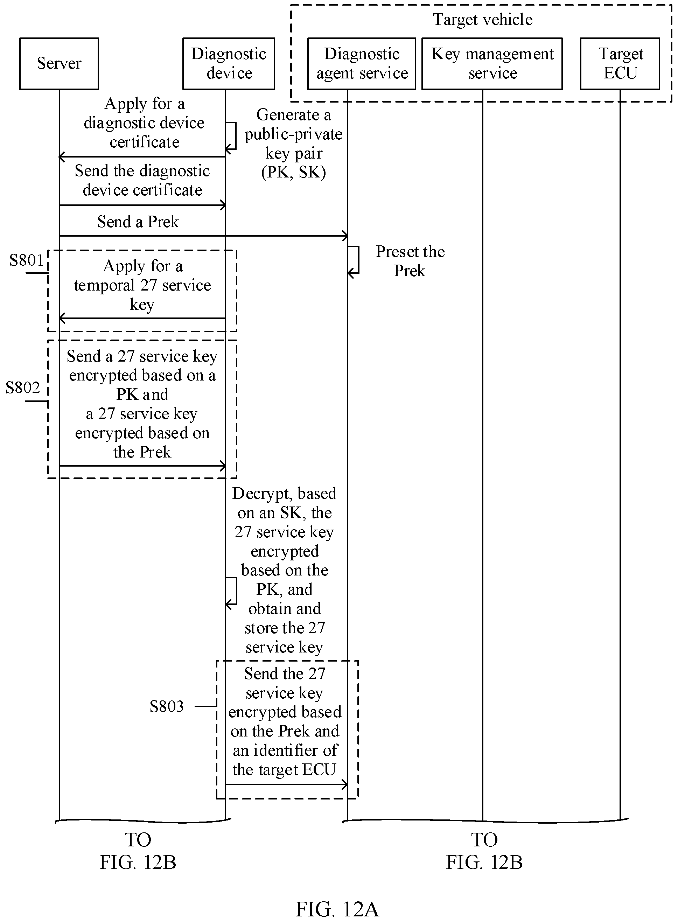

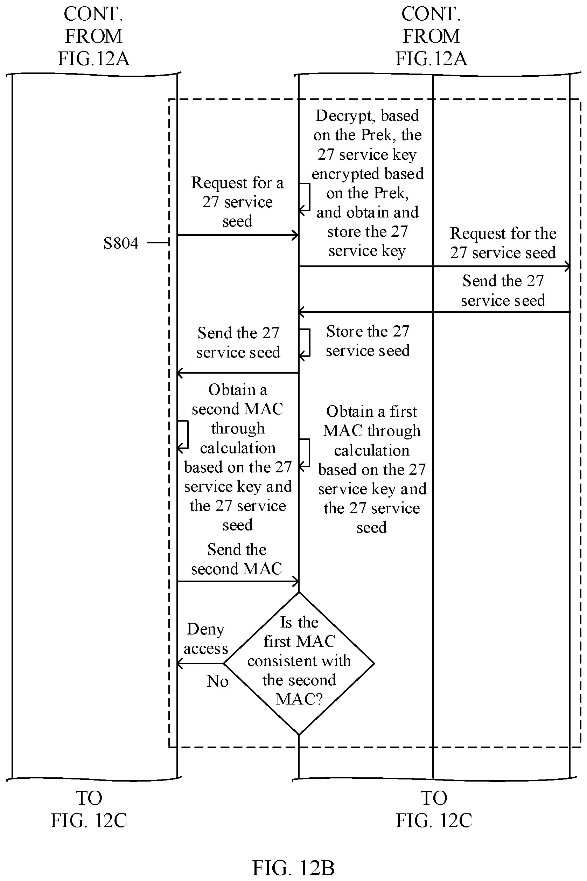

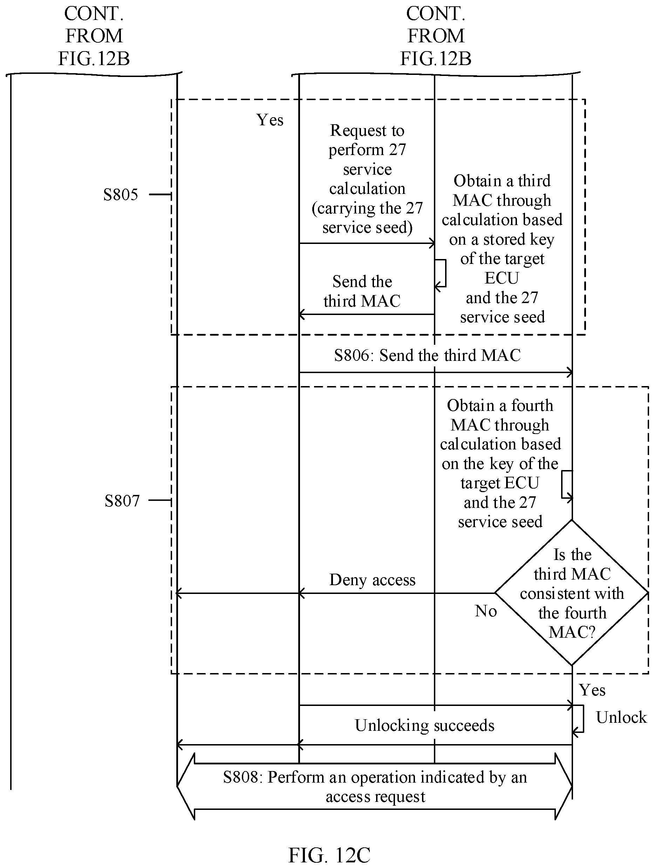

Refer to FIG. 12A to FIG. 12C. FIG. 12A to FIG. 12C are a flowchart of a secure access method according to an embodiment of this application, taking a case in which first information is a 27 service key as an example.

As shown in FIG. 12A to FIG. 12C, S801 may specifically include: A diagnostic device applies to a server for an ephemeral 27 service key.

As shown in FIG. 12A to FIG. 12C, S802 may specifically include: The server sends a 27 service key encrypted based on a PK and a 27 service key encrypted based on a Prek to the diagnostic device.

The 27 service key encrypted based on the PK is used by the diagnostic device to obtain the 27 service key through parsing. For example, the diagnostic device may decrypt, based on an SK that corresponds to the PK and that is locally stored, the 27 service key encrypted based on the PK, and obtain and store the obtained 27 service key. The diagnostic device obtains the 27 service key to be used for subsequent security verification (for example, first security verification) when the diagnostic device accesses a target vehicle. The PK and the SK are a public-private key pair generated by the diagnostic device. After generating the public-private key pair (PK, SK), the diagnostic device may send the public key PK to the server. For example, when the diagnostic device applies to the server for a diagnostic device certificate, the public key PK is carried. In view of this, the server may encrypt, based on the PK, information to be sent to the diagnostic device subsequently, to ensure security of an information transmission process. The 27 service key encrypted based on the Prek is used by the diagnostic device to be carried in an access request to be sent to the target vehicle. The server may further send a Prek encryption manner to a diagnosis agent service in the target vehicle, so that the diagnosis agent service presets a corresponding decryption manner, to subsequently parse information encrypted based on the Prek.

As shown in FIG. 12A to FIG. 12C, S803 may specifically include: The diagnostic device sends the 27 service key encrypted based on the Prek and an identifier of a target ECU to the diagnostic agent service in the target vehicle.

As shown in FIG. 12A to FIG. 12C, S804 may specifically include: First, the diagnostic agent service decrypts, based on the Prek, the 27 service key encrypted based on the Prek, and obtains and stores the 27 service key; and the diagnostic agent service requests, based on a request of the diagnostic device (for example, based on the identifier of the target ECU carried in the request), a corresponding 27 service seed from the target ECU, stores the 27 service seed sent by the target ECU, and sends the obtained 27 service seed to the diagnostic device. Then, the diagnostic agent service obtains a first MAC through calculation based on the stored 27 service key and the 27 service seed, and receives a second MAC obtained by the diagnostic device through calculation based on the stored 27 service key and the 27 service seed that is received from the diagnostic agent service. Finally, the diagnostic agent service performs the first security verification between the diagnostic agent service and the diagnostic device by comparing whether the second MAC is consistent with the first MAC.

As shown in FIG. 12A to FIG. 12C, S805 may specifically include: The diagnostic agent service requests a key management service to perform 27 service calculation when the first security verification succeeds; and correspondingly, the key management service may obtain a third MAC through calculation based on a stored key of the target ECU and the 27 service seed obtained from the diagnostic agent service, and send the third MAC to the diagnostic agent service.

As shown in FIG. 12A to FIG. 12C, S806 may specifically include: The diagnostic agent service sends the third MAC to the target ECU, to request the target ECU to perform second security verification between the diagnostic agent service and the target ECU.

As shown in FIG. 12A to FIG. 12C, S807 may specifically include: The target ECU obtains a fourth MAC through calculation based on the key of the target ECU and the 27 service seed, and then performs the second security verification between the diagnostic agent service and the target ECU by comparing whether the fourth MAC is consistent with the third MAC. When the second security verification succeeds, the target ECU may be unlocked, and feed back, to the diagnostic agent service, a message indicating that unlocking succeeds, so that the diagnostic agent feeds back, to the diagnostic device, the message indicating that unlocking succeeds, and then the subsequent step S808 is performed.

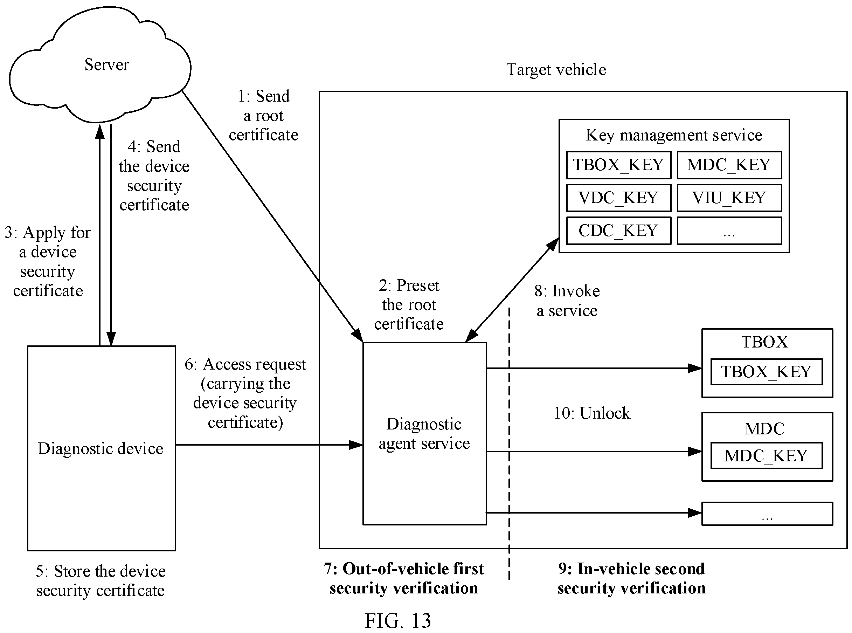

Refer to FIG. 13. FIG. 13 is a diagram of another secure access process according to an embodiment of this application, taking the system architecture shown in FIG. 4 as an example. A diagnostic device shown in FIG. 13 may be the diagnostic device shown in FIG. 8. A diagnostic agent service shown in FIG. 13 may be a service provided by the first apparatus shown in FIG. 8. A key management service shown in FIG. 13 may be a service provided by the first apparatus shown in FIG. 8 or a service provided by another module or apparatus in the vehicle (in the following example, that both the diagnostic agent service and the key management service are provided by the first apparatus is used as an example). The target ECU shown in FIG. 3 may be a T-BOX, an MDC, a VDC, a VIU, a CDC, or the like shown in FIG. 10.

As shown in FIG. 13, after the diagnostic device obtains, from a server, authorization for accessing a target vehicle, the server may send a root certificate to the target vehicle (sequence number 1 shown in FIG. 13). The root certificate includes an identifier of the diagnostic device that is to access the target vehicle. The root certificate may be used by the diagnostic agent service to perform validity check on an access request. After receiving the root certificate, the diagnostic agent service in the target vehicle may preset the root certificate (sequence number 2 shown in FIG. 13). When the diagnostic device needs to access a target ECU in the target vehicle, the diagnostic device may apply to the server for a device security certificate (sequence number 3 shown in FIG. 13). After receiving the device security certificate issued by the server (sequence number 4 shown in FIG. 13), the diagnostic device may store the device security certificate (sequence number 5 shown in FIG. 13). When receiving an access request (for example, accessing the target ECU) from the diagnostic device (sequence number 6 shown in FIG. 13), the diagnostic agent service may perform, based on the device security certificate carried in the access request and the preset root certificate, out-of-vehicle first security verification on permission of the diagnostic device to access the target vehicle (sequence number 7 shown in FIG. 13). When the first security verification succeeds, the diagnostic agent service may invoke the key management service (sequence number 8 shown in FIG. 13) to obtain an ECU key, and perform MAC calculation based on the ECU key, to request, from the target ECU, in-vehicle second security verification based on a MAC (sequence number 9 shown in FIG. 13). When the second security verification performed by the target ECU on permission of the diagnostic agent service to access the target ECU succeeds, the diagnostic agent service may unlock the target ECU (sequence number 10 shown in FIG. 13). Then, the diagnostic device may successfully access the target ECU.

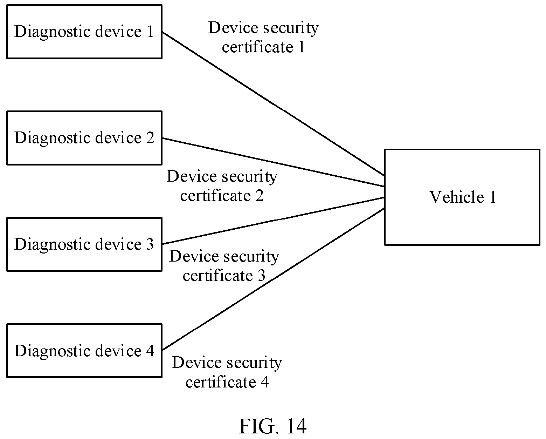

It may be understood that, based on the secure access process shown in FIG. 13, it is assumed that the diagnostic device has accessed a plurality of ECUs in a plurality of vehicles and stores corresponding device security certificates such as a device security certificate 1 stored by a diagnostic device 1 for accessing a vehicle 1, a device security certificate 2 stored by a diagnostic device 2 for accessing the vehicle 1, a device security certificate 3 stored by a diagnostic device 3 for accessing the vehicle 1, and a device security certificate 4 stored by a diagnostic device 4 for accessing the vehicle 1 that are shown in FIG. 14. Each device security certificate is only used to perform corresponding out-of-vehicle first security verification when one specific vehicle is accessed. Therefore, even if a third party obtains a device security certificate, the third party cannot successfully access the vehicle or another vehicle based on the device security certificate. Therefore, security of the vehicle and the another vehicle is not affected.

In addition, a solution in which the server manages, by presetting the root certificate of the diagnostic device, the permission of the diagnostic device to access the vehicle can further implement more rapid and secure distribution of authorization information, and is applicable to a wider range of scenarios, for example, applicable to an entry-level device or component without a symmetric system, applicable to an authentication 29 service standard, or the like.

In addition, according to the solution in which the server manages the permission of the diagnostic device to access the vehicle by presetting the root certificate of the diagnostic device, a permission range of the diagnostic device can be further flexibly controlled based on an actual requirement. For example, the server may indicate one vehicle VIN in one device security certificate to implement one-to-one access from a diagnostic device to a vehicle, or may indicate a plurality of vehicle VINs in one device security certificate to implement one-to-many access from a diagnostic device to vehicles.

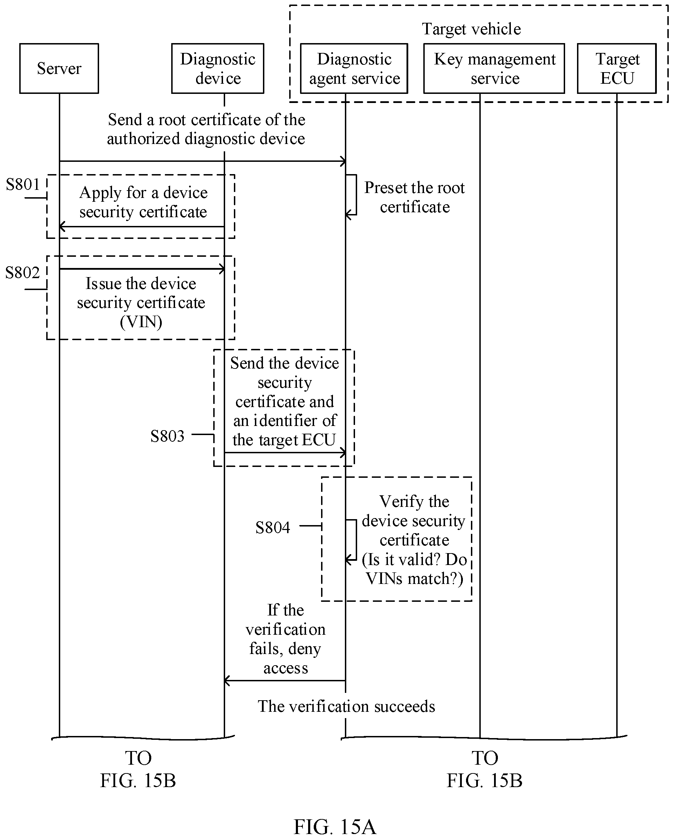

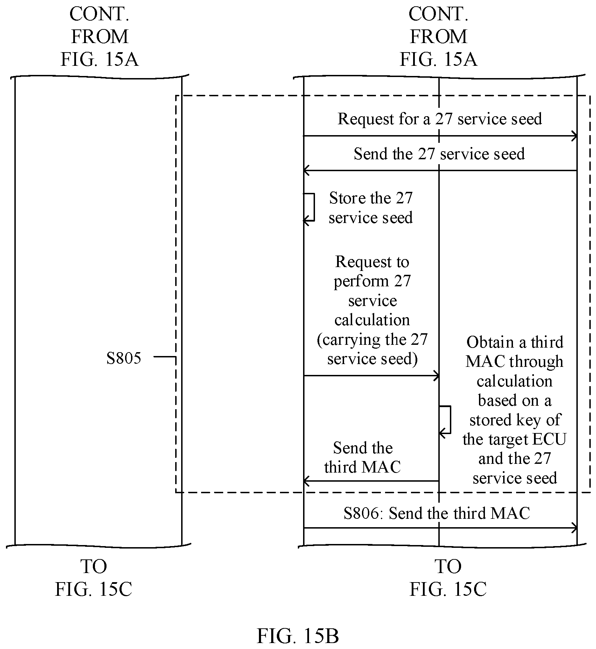

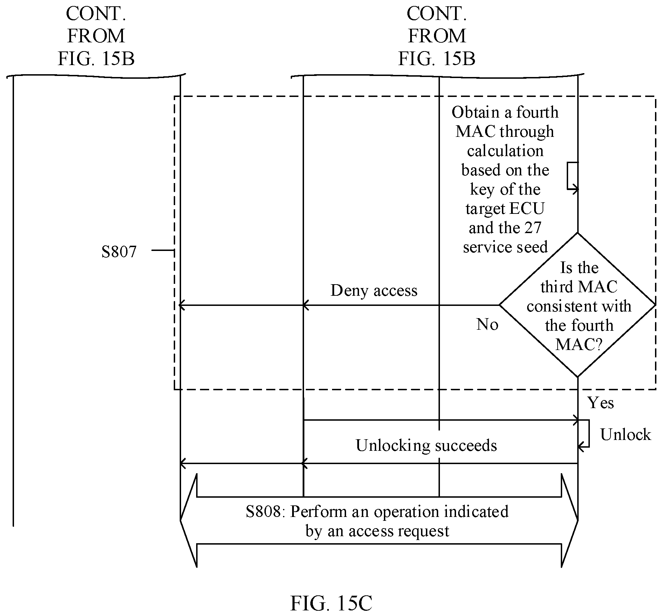

Refer to FIG. 15A to FIG. 15C. FIG. 15A to FIG. 15C show a secure access interaction process according to an embodiment of this application, taking a case in which first information is a device security certificate as an example.

As shown in FIG. 15A to FIG. 15C, S801 may specifically include: A diagnostic device applies to a server for a device security certificate.

As shown in FIG. 15A to FIG. 15C, S802 may specifically include: The server issues the device security certificate to the diagnostic device, where the device security certificate carries a VIN of a vehicle that can be accessed by the diagnostic device. In some embodiments, the device security certificate may carry one VIN, indicating that the diagnostic device is authorized to access only one vehicle. In some other embodiments, the device security certificate may carry a plurality of VINs, indicating that the diagnostic device is authorized to access a plurality of vehicles.

As shown in FIG. 15A to FIG. 15C, S803 may specifically include: The diagnostic device sends the device security certificate and an identifier of a target ECU to a diagnostic agent service in a target vehicle.

As shown in FIG. 15A to FIG. 15C, S804 may specifically include: The diagnostic agent service verifies the device security certificate. For example, the diagnostic agent service may separately verify, based on a preset root certificate, validity of the device security certificate and whether the VIN carried in the device security certificate matches a VIN of the target vehicle. The preset root certificate of the diagnostic agent service is obtained from the server.

As shown in FIG. 15A to FIG. 15C, S805 may specifically include: When first security verification succeeds, the diagnostic agent service obtains a 27 service seed from the target ECU, for example, obtains the 27 service seed from the target ECU based on the identifier of the target ECU, stores the 27 service seed, and requests a key management service to perform 27 service calculation. Correspondingly, the key management service may obtain a third MAC through calculation based on a stored key of the target ECU and the 27 service seed obtained from the diagnostic agent service, and send the third MAC to the diagnostic agent service.

As shown in FIG. 15A to FIG. 15C, S806 may specifically include: The diagnostic agent service sends the third MAC to the target ECU, to request the target ECU to perform second security verification between the diagnostic agent service and the target ECU.

As shown in FIG. 15A to FIG. 15C, S807 may specifically include: The target ECU obtains a fourth MAC through calculation based on the key of the target ECU and the 27 service seed, and then performs the second security verification between the diagnostic agent service and the target ECU by comparing whether the fourth MAC is consistent with the third MAC. When the second security verification succeeds, the target ECU may be unlocked, and feed back, to the diagnostic agent service, a message indicating that unlocking succeeds, so that the diagnostic agent feeds back, to the diagnostic device, the message indicating that unlocking succeeds, and then the subsequent step S808 is performed.

### Embodiment 2:

In Embodiment 2, when receiving an access request from a diagnostic device for requesting to access a target ECU in a target vehicle, a first apparatus in the target vehicle performs first security verification between the first apparatus and the diagnostic device based on first information carried in the access request, allows the diagnostic device to access the target vehicle after the first security verification succeeds, and participates in, as an intermediate device, subsequent data transmission between the diagnostic device and the vehicle. The first information may indicate a valid binding relationship between the diagnostic device and the target vehicle. For example, the first information may include but is not limited to a temporal key and a device security certificate. In an example, the first information is information that is obtained by the diagnostic device from a server and that is used for security verification.

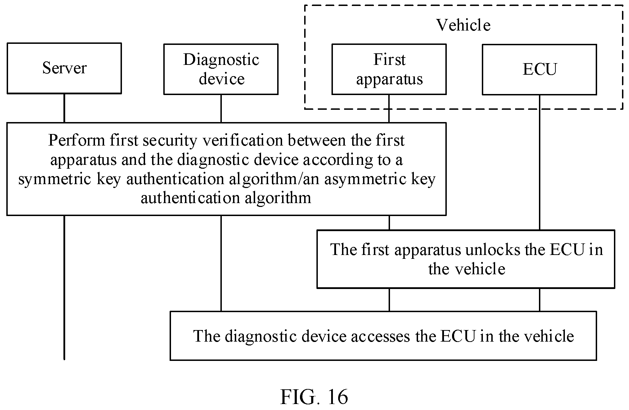

In an example, refer to FIG. 16. FIG. 16 is a diagram of a secure access process according to an embodiment of this application, taking a case in which the diagnostic device accesses a vehicle in the intelligent driving field in the system architecture shown in FIG. 4 as an example. As shown in FIG. 16, when the diagnostic device needs to access the vehicle, a first apparatus in the vehicle may perform the first security verification between the first apparatus and the diagnostic device. In this process, the first security verification may be performed based on the first information sent by the server to the diagnostic device. After the first security verification succeeds, the first apparatus may unlock an ECU in the vehicle. Then, the diagnostic device may successfully access the ECU in the vehicle.

In some embodiments, when the first apparatus performs the first security verification between the first apparatus and the diagnostic device, as shown in FIG. 16, the first apparatus may perform the first security verification according to a symmetric key authentication algorithm, or may perform the first security verification according to an asymmetric key authentication algorithm, or may perform the first security verification according to another security authentication algorithm. This is not specifically limited in embodiments of this application.

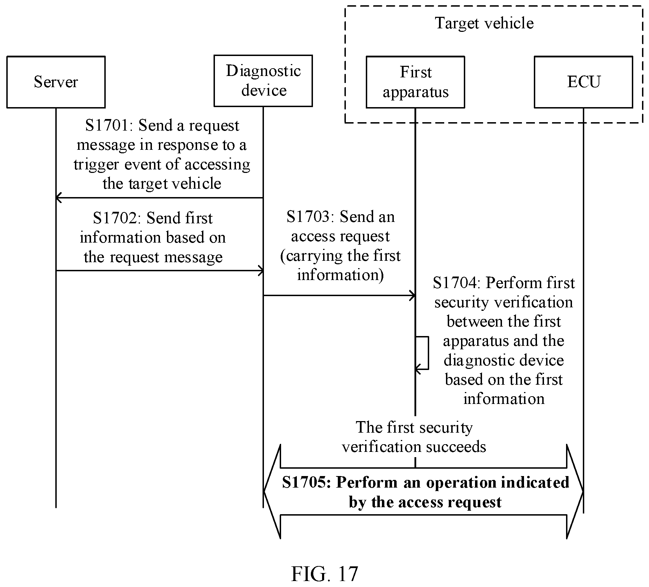

Refer to FIG. 17. FIG. 17 is a flowchart of a secure access method according to an embodiment of this application. As shown in FIG. 17, the secure access method provided in this embodiment of this application may be based on S1701 to S1705 shown in FIG. 17.

S1701: A diagnostic device sends a request message to a server in response to a trigger event of accessing a target vehicle.

For example, the request message sent by the diagnostic device (for example, a first diagnostic device) to the server may be a request message for accessing the target vehicle (for example, a first vehicle).

In an example, the trigger event of accessing the target vehicle may be a manually triggered operation, for example, an operation manually triggered by diagnostic personnel, or may be an event automatically triggered by the diagnostic device when a preset trigger condition is met. This is not specifically limited in embodiments of this application.

In an example, an occasion on which the diagnostic device in embodiments of this application sends the request message to the server in response to the trigger event of accessing the target vehicle may be before the vehicle is delivered, or may be after the vehicle is delivered. This is not specifically limited.

In an example, an objective of accessing the target vehicle may be but is not limited to performing problem diagnosis, issue resolution, or software upgrade on one or more ECUs in the target vehicle. For example, the diagnostic device may perform, in response to an operation of accessing the target vehicle, the problem diagnosis on the ECUs by reading data in the one or more ECUs in the target vehicle, and perform the issue resolution or the software upgrade on the target vehicle by modifying the data in the ECUs and/or writing data into the ECUs.

S1702: The server sends first information to the diagnostic device based on the request message.

In embodiments of this application, the first information is used by the target vehicle to perform security verification on the diagnostic device. For example, the first information is used by a first apparatus in the target vehicle to perform first security verification between the first apparatus and the diagnostic device when the diagnostic device requests to access the target vehicle. Essence of the first security verification is out-of-vehicle security verification. Whether the diagnostic device can access the target vehicle legitimately may be determined through the first security verification.

In an example, the first information may indicate a valid binding relationship between the diagnostic device and the target vehicle. For example, the first apparatus may determine, based on the first information, that the diagnostic device is allowed to access the target vehicle.

In some embodiments, the first information may indicate a temporal key, for example, an ephemeral symmetric key. In an example, the temporal key may correspond to an application scope and a validity period. In an example, the first information may be a 27 service key.

In some embodiments, the first information may be a device security certificate. In an example, the device security certificate may correspond to an application scope and a validity period.

Certainly, the first information may alternatively be other information that is provided by the server to the diagnostic device and that is used for security verification. This is not specifically limited in embodiments of this application.

In some embodiments, the first information sent by the server to the diagnostic device may be encrypted first information, for example, first information encrypted in a first encryption manner. The first information encrypted in the first encryption manner is directly carried in the access request when the diagnostic device sends the access request to the target vehicle, to prevent the temporal key, the device security certificate, or the like indicated by the first information from being maliciously tampered with. In addition, the server sends a first decryption manner to the target vehicle, where the first decryption manner corresponds to the first encryption manner, and the first decryption manner is used by the target vehicle to decrypt the first information when the target vehicle receives the first information encrypted in the first encryption manner. In addition, the server sends fourth information that is encrypted in a second encryption manner to the diagnostic device, and sends a second decryption manner corresponding to the second encryption manner to the diagnostic device, for the diagnostic device to decrypt the fourth information when the diagnostic device receives the fourth information that is encrypted in the second encryption manner. Information (for example, a temporal key) obtained by decrypting the fourth information is used to participate in security verification (for example, the first security verification) when the diagnostic device accesses the target vehicle.

For example, the first encryption manner is a Prek encryption manner, and the second encryption manner is a PK encryption manner.

S1703: The diagnostic device sends the access request to the first apparatus in the target vehicle, where the access request carries the first information.

The access request is used to request to access the target vehicle. An objective of requesting, by the diagnostic device, to access the target vehicle may include but is not limited to reading the data in the one or more ECUs in the target vehicle, modifying the data in the one or more ECUs in the target vehicle, writing the data into the one or more ECUs in the target vehicle, and the like.

In some embodiments, the first information received by the diagnostic device from the server is the encrypted first information, for example, the first information encrypted in the first encryption manner. The diagnostic device may send, to the first apparatus, the access request carrying the first information encrypted in the first encryption manner. Generally, if the first information received by the diagnostic device from the server is the first information encrypted in the first encryption manner, the diagnostic device further receives the fourth information from the server. The fourth information is the same as information (for example, the temporal key) indicated by the first information. The fourth information is used to participate in security verification (for example, the first security verification) performed when the diagnostic device accesses the target vehicle. A difference between the fourth information and the first information is that the first information is encrypted in the first encryption manner.

In some embodiments, the fourth information received by the diagnostic device from the server is obtained through encryption, for example, in the second encryption manner. In this case, the diagnostic device may decrypt the fourth information in the second decryption manner that corresponds to the second encryption manner and that is indicated by the server, to obtain the information in the fourth information, for example, the temporal key.

S1704: The first apparatus performs the first security verification between the first apparatus and the diagnostic device based on the first information.

The first security verification is verification on permission of the diagnostic device to access the target vehicle. The first security verification may be used to determine whether the diagnostic device can access the target vehicle legitimately.

In some embodiments, the first apparatus may perform, according to a symmetric key authentication algorithm, the first security verification between the first apparatus and the diagnostic device based on the first information. For example, it is assumed that the first information carried in the access request is an ephemeral symmetric key, for example, a 27 service key. The first apparatus may verify the ephemeral symmetric key according to the symmetric key authentication algorithm, to perform the first security verification between the first apparatus and the diagnostic device.

In some embodiments, the access request is used to access a target ECU in the target vehicle, and the access request carries an identifier of the target ECU. In this case, in a possible implementation, when verifying the ephemeral symmetric key according to the symmetric key authentication algorithm, the first apparatus may obtain a service seed (for example, a 27 service seed) from the target ECU based on the identifier that is of the target ECU and that is carried in the access request, and send the service seed to the diagnostic device. Then, the first apparatus may obtain a first MAC through calculation based on a service key and the service seed, and receive a second MAC obtained by the diagnostic device through calculation based on the service key and the service seed. Finally, the first apparatus verifies the ephemeral symmetric key by verifying whether the second MAC is the same as the first MAC.

In an example, the service seed (for example, the 27 service seed) may be an ephemeral service seed randomly generated by the target ECU, for example, an ephemeral service seed generated according to an algorithm like a random generation algorithm.

In some embodiments, the first apparatus may perform, according to the asymmetric key authentication algorithm, the first security verification between the first apparatus and the diagnostic device based on the first information. For example, it is assumed that the first information carried in the access request is a device security certificate, for example, a 29 service certificate. The first apparatus may verify the device security certificate according to the asymmetric key authentication algorithm, to perform the first security verification between the first apparatus and the diagnostic device.

In a possible implementation, when verifying the device security certificate according to the asymmetric key authentication algorithm, the first apparatus may first verify validity of the device security certificate (for example, the 29 service certificate). When the validity verification succeeds (for example, the device security certificate is valid), the first apparatus verifies whether an identification number carried in the device security certificate is consistent with a vehicle identification number in a root certificate stored in the first apparatus. For example, when a VIN carried in the device security certificate includes the VIN in the root certificate, the first apparatus may determine that the verification of the device security certificate succeeds, that is, the first security verification succeeds. When the VIN carried in the device security certificate does not include the VIN in the root certificate, the first apparatus may determine that the verification of the device security certificate fails, that is, the first security verification fails.

S1705: When the first security verification succeeds, the first apparatus performs an operation indicated by the access request.

In an example, after the first security verification succeeds, the first apparatus may unlock the target vehicle, so that the diagnostic device can successfully access the target vehicle. Alternatively, after the first security verification succeeds, the first apparatus may unlock the one or more ECUs in the target vehicle, so that the diagnostic device can successfully access the ECU in the target vehicle.

In an example, the operation that is indicated by the access request and that is performed by the first apparatus may include but is not limited to one or more of the following: sending target data of the one or more ECUs in the target vehicle to the diagnostic device, accepting modification of data in the one or more ECUs in the target vehicle by the diagnostic device, and accepting writing of data into the one or more ECUs in the target vehicle by the diagnostic device.

In some embodiments, the access request is used to access the target ECU in the target vehicle. In this case, that the operation that is indicated by the access request and that is performed by the first apparatus may include but is not limited to one or more of the following: sending target data in the target ECU to the diagnostic device, accepting modification of data in the target ECU by the diagnostic device, and accepting writing of data into the target ECU by the diagnostic device.

For specific related descriptions of S1701 to S1705, refer to the foregoing descriptions of S801 to S804 and S808. Details are not described herein again.

In some embodiments, if second security verification fails, the first apparatus may reject the access request of the diagnostic device. For example, the first apparatus may send, to the diagnostic device, a feedback message indicating that the target vehicle does not allow the diagnostic device to access the target vehicle or does not allow the diagnostic device to access the target ECU.

Similar to the process shown in FIG. 17, when another diagnostic device (for example, a second diagnostic device, where the second diagnostic device is different from the first diagnostic device) needs to access the target vehicle (for example, the first vehicle), a similar method may be used to perform first security verification between the first apparatus and the second diagnostic device, and the diagnostic device is allowed to access the first vehicle when the first security verification succeeds. For example, when the second diagnostic device needs to access the first vehicle, the second diagnostic device may request, from the server, third information used for the first security verification, and send, to the first apparatus, an access request (for example, a third access request) that carries the third information. When receiving the third access request from the second diagnostic device, the first apparatus performs the first security verification between the first apparatus and the second diagnostic device based on the third information carried in the third access request (where, for example, the third information indicates a valid binding relationship between the second diagnostic device and the first vehicle). For example, the first security verification is performed according to the symmetric key authentication algorithm or the asymmetric key authentication algorithm, depending on specific content of the third information. For example, the third information may be a temporal key or a device security certificate. After the first security verification succeeds, the first apparatus may allow the second diagnostic device to access the first vehicle, and participate in, as an intermediate device, subsequent data transmission between the diagnostic device and the first vehicle.

In embodiments, the third information is different from the first information. In other words, the first information allocated by the server to the first diagnostic device is used by the first diagnostic device to access the first vehicle, and the third information allocated by the server to the second diagnostic device is used by the second diagnostic device to access the first vehicle. The second diagnostic device cannot pass, based on the first information, the first security verification performed on the first diagnostic device by the vehicle. Therefore, the first diagnostic device cannot successfully access the vehicle based on the first information. Similarly, the first diagnostic device cannot pass, based on the third information, the first security verification performed on the first diagnostic device by the vehicle. Therefore, the first diagnostic device cannot successfully access the vehicle based on the third information. In embodiments, the first information and the second information may be temporal keys or device security certificates.

It may be understood that, based on the secure access method provided in Embodiment 2 of this application, authorization management is performed on a diagnostic device and a vehicle (for example, between one diagnostic device and one vehicle). As shown in FIG. 9, one-to-one authorization in which the diagnostic device 1 uses the temporal key 1 to access the vehicle 1, the diagnostic device 2 uses the temporal key 2 to access the vehicle 2, the diagnostic device 3 uses the temporal key 2 to access the vehicle 3, the diagnostic device 4 uses the temporal key 4 to access the vehicle 4, the diagnostic device 1 uses the temporal key 5 to access the vehicle 2, the diagnostic device 1 uses the temporal key 6 to access the vehicle 3, the diagnostic device 1 uses the temporal key 7 to access the vehicle 4, and the like, and one-to-one first security verification performed by a vehicle on permission of a diagnostic device to access the vehicle can be used to avoid impact of a security hazard in one vehicle to another vehicle. For example, even if a temporal key or a device security certificate used to access a target vehicle is obtained by a third party, because the temporal key or the device security certificate indicates a valid binding relationship between the diagnostic device and the target vehicle, the third party cannot access another vehicle based on the temporal key or the device security certificate. Therefore, security of the another vehicle is not affected.

In addition, an isolation function provided by a first apparatus in the target vehicle can prevent the diagnostic device from obtaining a key of an ECU in the vehicle. In other words, the key (including a key of a target ECU) of the ECU in the vehicle is invisible to the diagnostic device. Therefore, a risk of leakage of the key of the ECU in the target vehicle is eliminated, and further, impact on security of the target vehicle and the another vehicle can be avoided.

In addition, because first information such as a temporal key/a device security certificate usually has a validity period, even if the third party obtains the temporal key/the device security certificate, when the third party maliciously accesses the target vehicle based on the first information, the temporal key/the device security certificate may have been invalid, and therefore, no security impact is caused to the target vehicle. In addition, even if the temporal key/the device security certificate is not invalid, because the temporal key/the device security certificate is issued by the server for the diagnostic device to access the target vehicle, the third party cannot successfully access another vehicle based on the temporal key/the device security certificate. Therefore, security of the another vehicle is not affected.

As described above, the first information in embodiments of this application may be a temporal key, or may be a device security certificate.

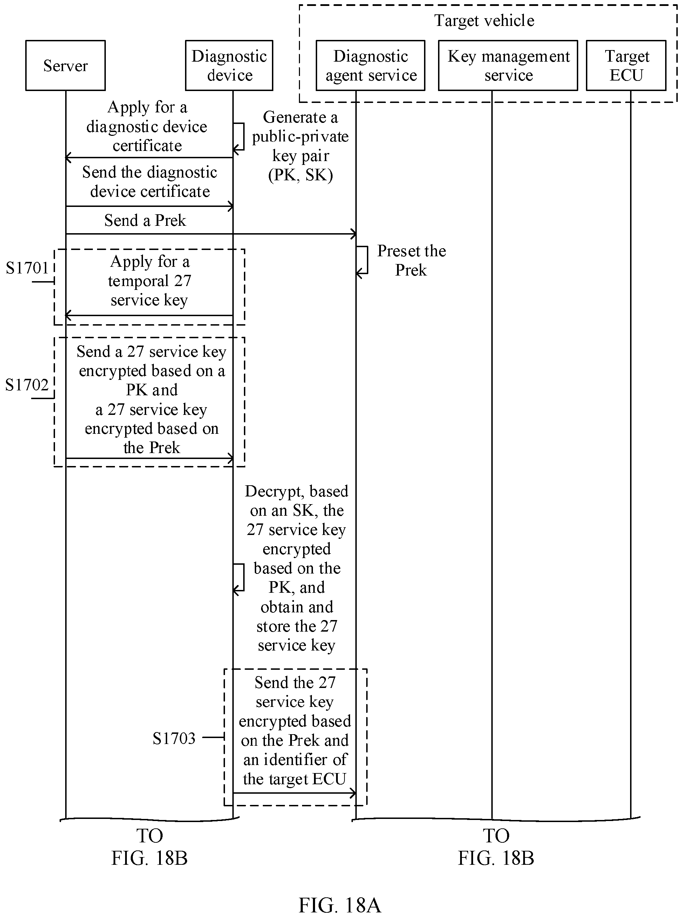

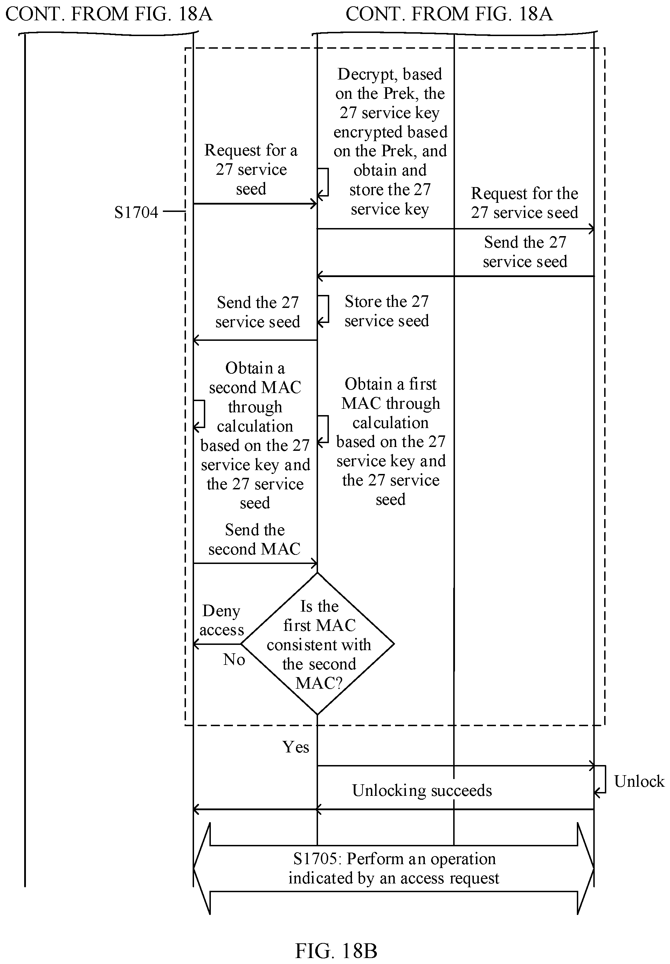

For example, the first information is the 27 service key and the access request is used to access the target ECU in the target vehicle. FIG. 18A and FIG. 18B are an interaction diagram of a secure access process according to an embodiment of this application. As shown in FIG. 18A and FIG. 18B, the method may include S1701 to S1705. For related descriptions of S1701 to S1705, respectively refer to the foregoing descriptions of S801 to S804 and S808 in FIG. 12A to FIG. 12C. Details are not described herein again.

It may be understood that, based on the secure access process shown in FIG. 18A and FIG. 18B, it is assumed that the diagnostic device has accessed a plurality of ECUs in a plurality of vehicles and stores corresponding temporal keys. Each temporal key is only used to perform corresponding out-of-vehicle first security verification when one specific vehicle is accessed or one specific ECU in one specific vehicle is accessed. Therefore, even if a third party obtains a temporal key, the third party cannot successfully access another ECU in the vehicle and another vehicle based on the temporal key. Therefore, security of the another ECU in the vehicle and the another vehicle is not affected. In addition, because the temporal key usually has a validity period, even if the third party obtains a temporal key corresponding to a vehicle, when the third party maliciously accesses the vehicle based on the temporal key, the temporal key may have been invalid. Therefore, security of the vehicle is not affected.

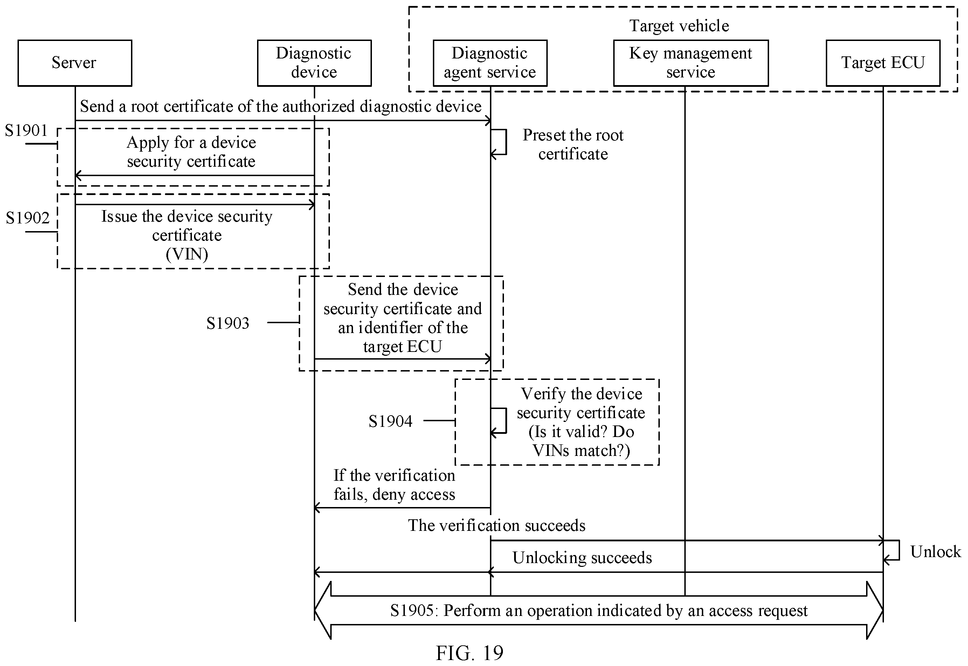

For example, the first information is the device security certificate and the access request is used to access the target ECU in the target vehicle. FIG. 19 is an interaction diagram of a secure access process according to an embodiment of this application. As shown in FIG. 19, the method may include S1901 to S1905. For related descriptions of S1901 to S1905, respectively refer to the foregoing descriptions of S801 to S804 and S808 in FIG. 15A to FIG. 15C. Details are not described herein again.

It may be understood that, based on the secure access process shown in FIG. 19, it is assumed that the diagnostic device has accessed a plurality of ECUs in a plurality of vehicles and stores corresponding device security certificates. Each device security certificate is only used to perform corresponding out-of-vehicle first security verification when one specific vehicle is accessed. Therefore, even if a third party obtains a device security certificate, the third party cannot successfully access the vehicle or another vehicle based on the device security certificate. Therefore, security of the vehicle and the another vehicle is not affected.

In addition, a solution in which the server manages, by presetting the root certificate of the diagnostic device, the permission of the diagnostic device to access the vehicle can further implement more rapid and secure distribution of authorization information, and is applicable to a wider range of scenarios, for example, applicable to an entry-level device or component without a symmetric system, applicable to an authentication 29 service standard, or the like.

In addition, according to the solution in which the server manages the permission of the diagnostic device to access the vehicle by presetting the root certificate of the diagnostic device, a permission range of the diagnostic device can be further flexibly controlled based on an actual requirement. For example, the server may indicate one vehicle VIN in one device security certificate to implement one-to-one access from a diagnostic device to a vehicle, or may indicate a plurality of vehicle VINs in one device security certificate to implement one-to-many access from a diagnostic device to vehicles.

### Embodiment 3:

In Embodiment 3, when receiving an access request from a diagnostic device for requesting to access a target ECU in a target vehicle, a first apparatus in the target vehicle requests the target ECU to perform second security verification between the target ECU and the first apparatus, allows the diagnostic device to access the target ECU in the target vehicle after the second security verification succeeds, and participates in, as an intermediate device, subsequent data transmission between the diagnostic device and the target ECU.

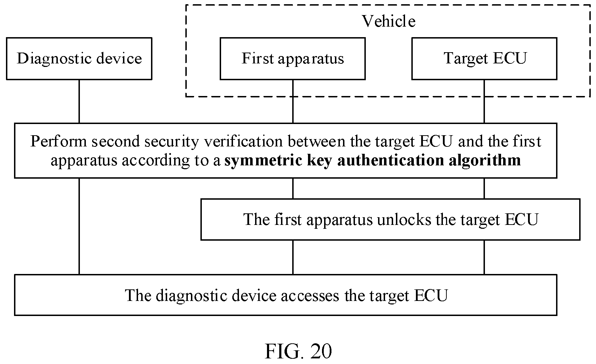

In an example, refer to FIG. 20. FIG. 20 is a diagram of a secure access process according to an embodiment of this application, taking a case in which the diagnostic device accesses the target ECU in the vehicle in the intelligent driving field in the system architecture shown in FIG. 4 as an example. As shown in FIG. 20, when the diagnostic device needs to access the target ECU in the vehicle, the first apparatus in the vehicle may serve as a proxy device to collaborate with the target ECU to perform the second security verification between the target ECU and the first apparatus. After the second security verification succeeds, the first apparatus may unlock the target ECU. Then, the diagnostic device may successfully access the target ECU.

In some embodiments, when the target ECU performs the second security verification between the target ECU and the first apparatus, the target ECU may perform the second security verification according to the symmetric key authentication algorithm shown in FIG. 20, or may perform the second security verification according to the another security authentication algorithm. This is not specifically limited in embodiments of this application.

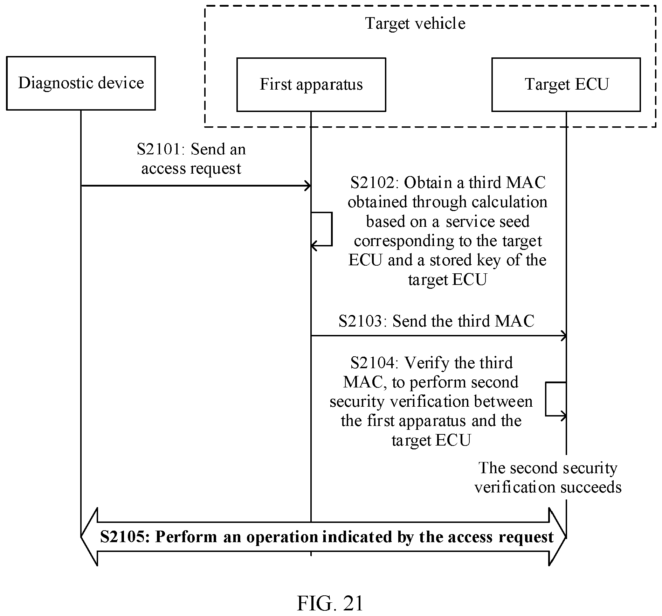

Refer to FIG. 21. FIG. 21 is a flowchart of a secure access method according to an embodiment of this application. As shown in FIG. 21, the secure access method provided in this embodiment of this application may be implemented based on S2101 to S2105 shown in FIG. 21.

S2101: A first apparatus receives an access request of a diagnostic device.

The access request carries an identifier of a target ECU, and the access request is used to request to access the target ECU in a target vehicle. An objective of requesting, by the diagnostic device, to access the target ECU may include but is not limited to reading data in the target ECU, modifying the data in the target ECU, writing data into the target ECU, and the like.

S2102: The first apparatus obtains a third MAC obtained through calculation based on a service seed corresponding to the target ECU and a stored key of the target ECU.

The service seed corresponding to the target ECU may be obtained by the first apparatus from the target ECU based on the identifier that is of the ECU and that is carried in the access request.

In some embodiments, the first apparatus may provide a diagnostic agent service and a key management service. In this case, the first apparatus may invoke the key management service to obtain the stored key (for example, a target ECU key) of the target ECU, and then obtain the third MAC through calculation based on the key of the target ECU and the service seed (for example, a 27 service seed) corresponding to the target ECU.

In some other embodiments, the first apparatus does not provide the key management service, and the key management service is provided by another module or apparatus, for example, provided by a key management module. In this case, the first apparatus may send the service seed corresponding to the target ECU to the key management module, and request the key management module to perform MAC calculation. The key management module may invoke the key management service to obtain the stored key (for example, the target ECU key) of the target ECU, obtain the third MAC through calculation based on the key of the target ECU and the service seed (for example, the 27 service seed) corresponding to the target ECU, and then send the third MAC to the first apparatus.

The key management service may be used to store an in-vehicle key (for example, a key of an ECU) and perform related calculation (for example, MAC calculation). For example, one ECU in a vehicle corresponds to one ECU key. It should be noted that the in-vehicle key (for example, the key of the ECU) in embodiments of this application is invisible to the diagnostic device. In view of this, there is no risk of leakage of a key of an ECU in the target vehicle, to avoid impact on security of the target vehicle and another vehicle.

S2103: The first apparatus sends the third MAC to the target ECU.

In an example, the first apparatus may send the third MAC to the target ECU based on the identifier of the ECU carried in the access request.

S2104: The target ECU verifies the third MAC, to perform second security verification between the first apparatus and the target ECU.

The second security verification is verification on permission of the first apparatus, for example, verification on permission of the first apparatus to unlock the target ECU. Whether the first apparatus can unlock the target ECU legitimately may be determined through the second security verification.

In some embodiments, a first control module may perform the second security verification according to a symmetric key authentication algorithm. In an example, when the second security verification is performed according to the symmetric key authentication algorithm, the target ECU may obtain a fourth MAC through calculation based on the key of the target ECU and the service seed (for example, the 27 service seed) corresponding to the target ECU, and then verify whether the fourth MAC is the same as the third MAC. For example, when the fourth MAC is the same as the third MAC, the target ECU may determine that the second security verification succeeds; or when the fourth MAC is different from the third MAC, the target ECU may determine that the second security verification fails.

S2105: After the second security verification succeeds, the target ECU performs an operation indicated by the access request.

In an example, after the second security verification succeeds, the first apparatus may unlock the target ECU, so that the diagnostic device can successfully access the target ECU.

In an example, that the target ECU performs the operation indicated by the access request may include but is not limited to one or more of the following: sending target data in the target ECU to the diagnostic device, accepting modification of data in the target ECU by the diagnostic device, and accepting writing of data into the target ECU by the diagnostic device.

When sending the target data in the target ECU to the diagnostic device, the target ECU may directly send the target data to the diagnostic device, or may indirectly send the target data to the diagnostic device through the first apparatus. This is not specifically limited. Similarly, when the modification of the data in the target ECU by the diagnostic device is accepted or writing of the data into the target ECU by the diagnostic device is accepted, the diagnostic device may directly modify the data in the target ECU/directly write the data into the target ECU, or may indirectly modify the data in the target ECU/indirectly write the data into the target ECU through the first apparatus. This is not specifically limited.

In some embodiments, if the second security verification fails, the first apparatus may reject the access request of the diagnostic device. For example, the first apparatus may send, to the diagnostic device, a feedback message indicating that the target vehicle does not allow the diagnostic device to access the target ECU.

For specific related descriptions of S2101 to S2105, refer to the foregoing descriptions of S803 and S805 to S808. Details are not described herein again.

Similar to the process shown in FIG. 21, when the diagnostic device (for example, a first diagnostic device) needs to access another ECU (for example, a second ECU, where the second ECU is different from the first ECU) in the target vehicle (for example, a first vehicle), a similar method may be used to perform second security verification between the first apparatus and the second ECU. When the second security verification succeeds, the diagnostic device is allowed to access the second ECU. For example, when the diagnostic device needs to access the second ECU in the first vehicle, the diagnostic device may send an access request (for example, a second access request) to the first apparatus. When receiving the second access request from the first diagnostic device, the first apparatus may request the second ECU to perform the second security verification between the second ECU and the first apparatus, for example, perform the second security verification according to the symmetric key authentication algorithm. Further, when the second security verification succeeds, the first apparatus allows the first diagnostic device to access the second ECU in the target vehicle, and participates in, as an intermediate device, subsequent data transmission between the first diagnostic device and the second ECU.

Alternatively, when another diagnostic device (for example, a second diagnostic device, where the second diagnostic device is different from the first diagnostic device) needs to access an ECU (for example, a third ECU, where the third ECU may be the same as the first ECU, or may be different from the first ECU) in the target vehicle (for example, the first vehicle), a similar method may be used to perform second security verification between the first apparatus and the third ECU. When both a first security verification and the second security verification succeed, the diagnostic device is allowed to access the third ECU. For example, when the second diagnostic device needs to access the third ECU in the first vehicle, the second diagnostic device may send an access request (for example, a third access request) to the first apparatus. When receiving the third access request from the second diagnostic device, the first apparatus may request the third ECU to perform the second security verification between the third ECU and the first apparatus, for example, perform the second security verification according to the symmetric key authentication algorithm. Further, when the second security verification succeeds, the first apparatus allows the second diagnostic device to access the third ECU in the target vehicle, and participates in, as an intermediate device, subsequent data transmission between the diagnostic device and the third ECU.

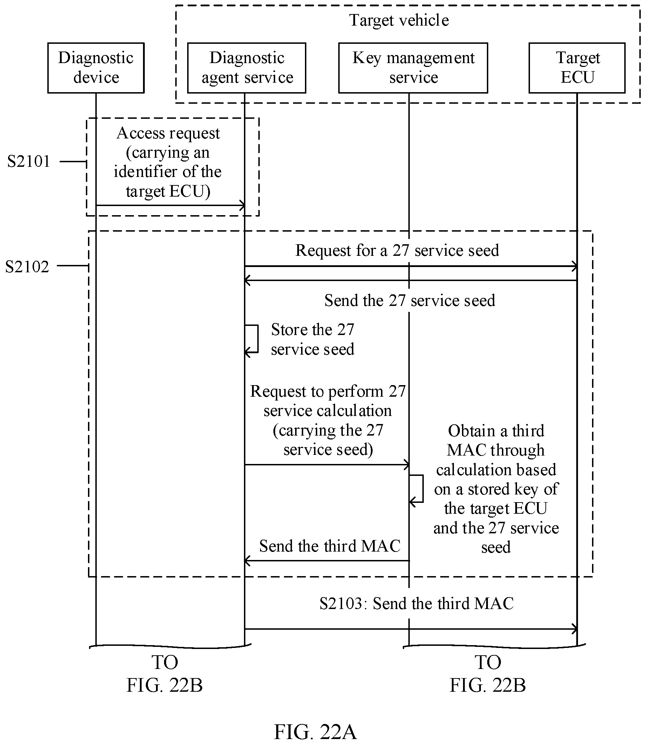

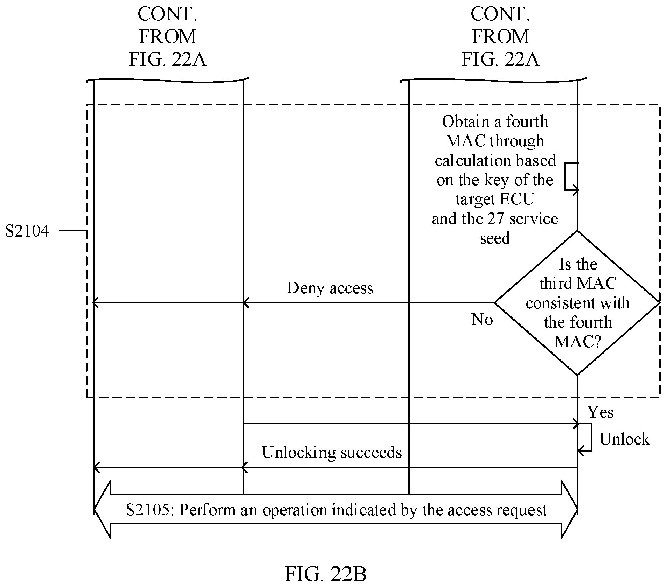

In an example, refer to FIG. 22A and FIG. 22B. FIG. 22A and FIG. 22B are an interaction diagram of a secure access process according to an embodiment of this application. As shown in FIG. 22A and FIG. 22B, the method may include S2101 to S2105. For related descriptions of S2101 to S2105, respectively refer to the foregoing descriptions of S803 and S805 to S808 in FIG. 12A to FIG. 12C. Details are not described herein again.

It may be understood that based on the secure access method provided in Embodiment 3 of this application, an isolation function provided by a first apparatus in a target vehicle can prevent a diagnostic device from obtaining a key of an ECU in the vehicle. In other words, the key (including a key of a target ECU) of the ECU in the vehicle is invisible to the diagnostic device. Therefore, a risk of leakage of the key of the ECU in the target vehicle is eliminated, and further, impact on security of the target vehicle and another vehicle can be avoided.

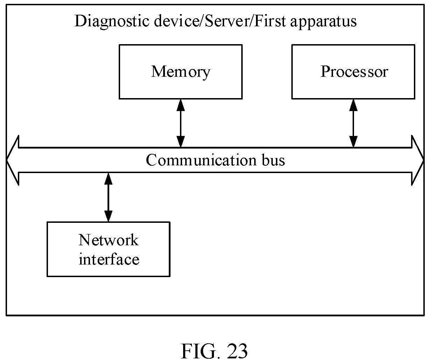

Based on a same invention concept, an embodiment of this application further provides a diagnostic device/server/first apparatus. For example, as shown in FIG. 23, the diagnostic device/server/first apparatus may include a memory, a processor, a network interface, and a communication bus. The processor, the memory, and the network interface are connected through a double data rate (double data rate, DDR) bus or another type of bus. The network interface is configured to communicate with another device or apparatus.

The processor may be a central processing unit (central processing unit, CPU), or may be another specific integrated circuit. The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. In an actual application, the diagnostic device/server/first apparatus may alternatively include a plurality of processors, and the processors may include one or more processor cores (cores).

The memory is usually configured to store computer program-executable program code. The executable program code includes instructions. The processor runs the instructions stored in the memory, to perform various function applications of the diagnostic device/server/first apparatus and data processing. The memory may include a program storage region and a data storage region. The program storage region may store an operating system, an application required for at least one function, and the like. The data storage region may store data created during use of the diagnostic device/server/first apparatus and the like.

In addition, the memory may include a high-speed random access memory, and may further include a non-volatile memory, for example, at least one magnetic disk storage device, a flash memory device, or a universal flash storage (universal flash storage, UFS).

It may be understood that the structure shown in FIG. 23 in this application does not constitute a specific limitation on the diagnostic device/server/first apparatus. In some other embodiments of this application, the diagnostic device/server/first apparatus may include more or fewer components than those shown in the figure, or some components may be combined, or some components may be split, or different component arrangements may be used. The components may be implemented by hardware, software, or a combination of software and hardware.

It should be understood that the solutions in embodiments of this application may be appropriately combined for use, and explanations or descriptions of terms in embodiments may be cross-referenced or explained in embodiments. This is not limited.

It should be further understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be understood that, to implement functions of any one of the foregoing embodiments, the diagnostic device/server/first apparatus includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the diagnostic device/server/first apparatus may be divided into function modules. For example, each function module corresponding to each function may be obtained through division, or two or more functions may be integrated into one processing module. The integrated module may be implemented in a form of hardware, or may be implemented in a form of a software function module. It should be noted that, in embodiments of this application, division into modules is an example, and is merely logical function division. In an actual implementation, another division manner may be used. It should be further understood that each module in the diagnostic device/server/first apparatus or the like may be implemented in a form of software and/or hardware. This is not specifically limited herein. In other words, the diagnostic device/server/first apparatus or the like is presented in a form of a function module. The "module" herein may be an application-specific integrated circuit ASIC, a circuit, a processor and a memory that executes one or more software or firmware programs, an integrated logic circuit, and/or another component that can provide the foregoing functions.

In an optional manner, when software is used to implement data transmission, the data transmission may be implemented totally or partially in a form of a computer program product. The computer program product includes one or more computer instructions. When the computer program instructions are loaded and executed on a computer, the procedures or functions according to embodiments of this application are all or partially implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid state disk (solid state disk, SSD)), or the like.

Method or algorithm steps described in combination with embodiments of this application may be implemented by hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read-only memory (erasable programmable read-only memory, EPROM), an electrically erasable read-only memory (electrically erasable programmable read-only memory, EEPROM), a register, a hard disk, a removable hard disk, a compact disc read-only memory (compact disc read-only memory, CD-ROM), or any other form of storage medium well known in the art. For example, the storage medium is coupled to the processor, so that the processor can read information from the storage medium and write information into the storage medium. Certainly, the storage medium may alternatively be a component of the processor. The processor and the storage medium may be located in an application-specific integrated circuit (application-specific integrated circuit, ASIC). In addition, the ASIC may be located in the diagnostic device/server/first apparatus or the like. Certainly, the processor and the storage medium may exist as discrete components.

Based on the foregoing descriptions of the implementations, a person skilled in the art may clearly understand that for the purpose of convenient and brief descriptions, division into the foregoing function modules is merely used as an example for descriptions. In an actual application, the foregoing functions can be allocated to different function modules for implementation based on a requirement, that is, an inner structure of an apparatus is divided into different function modules to implement all or some of the functions described above.

## Claims

1. A secure access method, applied to a first apparatus in a first vehicle, wherein the method comprises:
receiving a first access request from a first diagnostic device, wherein the first access request carries first information, the first access request is used to request to access the first vehicle, and the first information indicates a valid binding relationship between the first diagnostic device and the first vehicle;
performing, based on the first information, first security verification on permission of the first diagnostic device to access the first vehicle; and
sending a first feedback message to the first diagnostic device when the first security verification succeeds, wherein the first feedback message indicates that the first diagnostic device is allowed to access the first vehicle.

2. The method according to claim 1, wherein the first apparatus has a key of an electronic control unit ECU in the first vehicle, and the first diagnostic device does not store the key of the ECU in the first vehicle.

3. The method according to claim 1 or 2, wherein the first information is information encrypted in a first encryption manner, the first information indicates a temporal key, and performing, based on the first information, the first security verification on the permission of the first diagnostic device to access the first vehicle comprises:
decrypting the first information in a first decryption manner to obtain the temporal key, wherein the first decryption manner is indicated by a server, and the first decryption manner corresponds to the first encryption manner; and
verifying the temporal key according to a symmetric key authentication algorithm, to perform the first security verification.

4. The method according to claim 3, wherein the first access request is used to request to access a first ECU in the first vehicle, the temporal key is a 27 service key, and verifying the temporal key according to the symmetric key authentication algorithm comprises:
obtaining a 27 service seed from the first ECU, and sending the 27 service seed to the first diagnostic device;
obtaining a first message authentication code MAC through calculation based on the 27 service key and the 27 service seed;
receiving a second MAC obtained through calculation by the first diagnostic device based on the 27 service key and the 27 service seed; and
verifying whether the second MAC is the same as the first MAC, wherein
the first feedback message further indicates that the first diagnostic device is allowed to access the first ECU.

5. The method according to claim 1 or 2, wherein the first information is a device security certificate, and performing, based on the first information, the first security verification on the permission of the first diagnostic device to access the first vehicle comprises:
verifying validity of the device security certificate; and
when the device security certificate is valid, verifying whether an identification number carried in the device security certificate is consistent with an identification number of the first vehicle, to perform the first security verification.

6. The method according to claim 5, wherein
the device security certificate carries one identification number, and the one identification number is the identification number of the first vehicle; or
the device security certificate carries a plurality of identification numbers, and the plurality of identification numbers comprise the identification number of the first vehicle.

7. The method according to any one of claims 1 to 6, wherein the first access request further carries an identifier of the first ECU, the first access request is used to request to access the first ECU in the first vehicle, and the method further comprises:
requesting, based on the identifier of the first ECU, the first ECU to perform second security verification on the first apparatus to access the first ECU, wherein the second security verification is performed based on a key of the first ECU, and the key of the first ECU is invisible to the first diagnostic device.

8. The method according to claim 7, wherein the method further comprises:
obtaining a third MAC, wherein the third MAC is obtained through calculation based on the stored key of the first ECU and a service seed corresponding to the first ECU, and the service seed corresponding to the first ECU is obtained from the first ECU; and
sending the third MAC to the first ECU, to request the first ECU to perform the second security verification.

9. The method according to claim 7 or 8, wherein sending the first feedback message to the first diagnostic device comprises:
sending the first feedback message to the first diagnostic device when the first security verification succeeds and the second security verification succeeds.

10. The method according to claim 7 or 8, wherein the method further comprises:
sending a third feedback message to the first diagnostic device when the second security verification fails, wherein the third feedback message indicates that the first vehicle does not allow the first diagnostic device to access the first ECU.

11. The method according to any one of claims 1 to 10, wherein the method further comprises:
receiving a second access request from the first diagnostic device, wherein the second access request carries second information and an identifier of a second ECU, the second access request is used to request to access the second ECU in the first vehicle, and the second information indicates a valid binding relationship between the first diagnostic device and the first vehicle;
performing, based on the second information, the first security verification on the permission of the first diagnostic device to access the first vehicle;
when the first security verification succeeds, requesting the second ECU to perform, based on a key of the second ECU, second security verification on the first apparatus to access the second ECU, wherein the key of the second ECU is invisible to the first diagnostic device; and
when the second security verification succeeds, sending, to the first diagnostic device, feedback information indicating that the first diagnostic device is allowed to access the second ECU.

12. The method according to any one of claims 1 to 11, wherein the method further comprises:
receiving a third access request from a second diagnostic device, wherein the third access request carries third information and an identifier of a third ECU, the third access request is used to request to access the third ECU in the first vehicle, and the third information indicates a valid binding relationship between the second diagnostic device and the first vehicle;
performing, based on the third information, first security verification on permission of the second diagnostic device to access the first vehicle;
when the first security verification succeeds, requesting the third ECU to perform, based on a key of the third ECU, second security verification on the first apparatus to access the third ECU, wherein the key of the third ECU is invisible to the second diagnostic device; and
when the second security verification succeeds, sending, to the second diagnostic device, feedback information indicating that the second diagnostic device is allowed to access the third ECU.

13. A secure access method, applied to a diagnostic device, wherein the method comprises:
sending a request message for accessing a first vehicle to a server;
receiving first information from the server, wherein the first information indicates a valid binding relationship between the diagnostic device and the first vehicle; and
sending a first access request to a first apparatus in the first vehicle, wherein the first access request is used to request to access the first vehicle, and the first access request carries the first information.

14. The method according to claim 13, wherein the first apparatus has a key of an ECU in the first vehicle, and the diagnostic device does not store the key of the ECU in the first vehicle.

15. The method according to claim 13 or 14, wherein the first access request further carries an identifier of a first ECU, and the first access request is used to request to access the first ECU in the first vehicle.

16. The method according to any one of claims 13 to 15, wherein the first information is information encrypted in a first encryption manner, and the method further comprises:
receiving fourth information from the server, wherein the fourth information is a temporal key encrypted in a second encryption manner;
decrypting the fourth information in a second decryption manner to obtain the temporal key, wherein the second decryption manner is indicated by the server, and the second decryption manner corresponds to the second encryption manner; and
participating in, based on the temporal key obtained by decrypting the fourth information, first security verification performed by the first apparatus on permission of the diagnostic device to access the first vehicle.

17. The method according to claim 16, wherein the temporal key is a 27 service key, and participating in, based on the temporal key obtained by decrypting the fourth information, the first security verification performed by the first apparatus on the permission of the first diagnostic device to access the first vehicle comprises:
requesting a 27 service seed of the first ECU from the first apparatus;
receiving the 27 service seed of the first ECU from the first apparatus;
obtaining a second MAC through calculation based on the 27 service key and the 27 service seed; and
sending the second MAC to the first apparatus, wherein the second MAC is used by the first apparatus to perform the first security verification.

18. The method according to any one of claims 13 to 15, wherein the first information is a device security certificate; and
the device security certificate carries one identification number, and the one identification number is an identification number of the first vehicle; or
the device security certificate carries a plurality of identification numbers, and the plurality of identification numbers comprise an identification number of the first vehicle.

19. The method according to any one of claims 13 to 18, wherein the method further comprises:
sending a second access request to the first apparatus, wherein the second access request is used to request to access a second ECU in the first vehicle, the second access request carries second information and an identifier of the second ECU, the second information is obtained from the server, and the second information indicates a valid binding relationship between the diagnostic device and the second ECU in the first vehicle.

20. The method according to any one of claims 13 to 19, wherein the method further comprises:
sending a request message for accessing a second vehicle to the server;
receiving fifth information from the server, wherein the fifth information indicates a valid binding relationship between the diagnostic device and the second vehicle, and the fifth information is different from the first information; and
sending a third access request to a second apparatus in the second vehicle, wherein the third access request is used to request to access the second vehicle, and the third access request carries the fifth information.

21. A secure access method, applied to a server, wherein the method comprises:
receiving a request message for accessing a first vehicle from a first diagnostic device; and
sending first information to the first diagnostic device, wherein the first information indicates a valid binding relationship between the first diagnostic device and the first vehicle.

22. The method according to claim 21, wherein the first information is information encrypted in a first encryption manner, the first information is directly carried when the first diagnostic device sends an access request to the first vehicle, and the method further comprises:
sending a first decryption manner to a first apparatus in the first vehicle, wherein the first decryption manner corresponds to the first encryption manner, and the first decryption manner is used by the first apparatus to decrypt the first information when the first apparatus receives the first information encrypted in the first encryption manner;
sending fourth information to the first diagnostic device, wherein the fourth information is a temporal key encrypted in a second encryption manner; and
sending a second decryption manner to the first diagnostic device, wherein the second decryption manner corresponds to the second encryption manner, the second decryption manner is used by the first diagnostic device to decrypt the fourth information when the first diagnostic device receives the fourth information encrypted in the second encryption manner, to obtain the temporal key, and the temporal key obtained by decrypting the fourth information is used to participate in security verification when the first diagnostic device accesses the first vehicle.

23. The method according to claim 21, wherein the first information is a device security certificate; and
the device security certificate carries one identification number, and the one identification number is an identification number of the first vehicle; or
the device security certificate carries a plurality of identification numbers, and the plurality of identification numbers comprise an identification number of the first vehicle.

24. The method according to any one of claims 21 to 23, wherein the method further comprises:
receiving a request message for accessing a second vehicle from a second diagnostic device; and
sending third information to the second diagnostic device, wherein the third information indicates a valid binding relationship between the second diagnostic device and the second vehicle, and the third information is different from the first information.

25. A secure access method, applied to a first apparatus in a first vehicle, wherein the method comprises:
sending a fourth access request to a first ECU in the first vehicle based on an indication of a first diagnostic device, wherein the fourth access request is used to request to perform second security verification on the first apparatus to access the first ECU, the fourth access request carries a third MAC, and the second security verification is performed based on a key of the first ECU; and
sending a first feedback message to the first diagnostic device when the second security verification succeeds, wherein the first feedback message indicates that the first diagnostic device is allowed to access the first ECU.

26. The method according to claim 25, wherein the first apparatus has a key of an ECU in the first vehicle, and the first diagnostic device does not store the key of the ECU in the first vehicle.

27. The method according to claim 25 or 26, wherein the method further comprises:
obtaining the third MAC, wherein the third MAC is obtained through calculation based on the key of the first ECU and a service seed corresponding to the first ECU, and the service seed corresponding to the first ECU is obtained from the first ECU.

28. The method according to any one of claims 25 to 27, wherein before sending the fourth access request to the first ECU, the method further comprises:
receiving a first access request that is from the first diagnostic device and that is used to request to access the first ECU, wherein the first access request carries first information and an identifier of the first ECU, and the first information indicates a valid binding relationship between the first diagnostic device and the first vehicle; and
performing, based on the first information, first security verification on permission of the first diagnostic device to access the first vehicle.

29. The method according to claim 28, wherein the first information is information encrypted in a first encryption manner, the first information indicates a temporal key, and performing, based on the first information, the first security verification on the permission of the first diagnostic device to access the first vehicle comprises:
decrypting the first information in a first decryption manner to obtain the temporal key, wherein the first decryption manner is indicated by a server, and the first decryption manner corresponds to the first encryption manner; and
verifying the temporal key according to a symmetric key authentication algorithm, to perform the first security verification.

30. The method according to claim 29, wherein the temporal key is a 27 service key, and verifying the temporal key according to the symmetric key authentication algorithm comprises:
obtaining a 27 service seed from the first ECU, and sending the 27 service seed to the first diagnostic device;
obtaining a first MAC through calculation based on the 27 service key and the 27 service seed; and
receiving a second MAC obtained through calculation by the first diagnostic device based on the 27 service key and the 27 service seed; and
verifying whether the second MAC is the same as the first MAC.

31. The method according to claim 28, wherein the first information is a device security certificate, and performing, based on the first information, the first security verification on the permission of the first diagnostic device to access the first vehicle comprises:
verifying validity of the device security certificate; and
when the device security certificate is valid, verifying whether an identification number carried in the device security certificate is consistent with an identification number of the first vehicle, to perform the first security verification.

32. The method according to claim 29, wherein
the device security certificate carries one identification number, and the one identification number is an identification number of the first vehicle; or
the device security certificate carries a plurality of identification numbers, and the plurality of identification numbers comprise an identification number of the first vehicle.

33. An apparatus, wherein the apparatus comprises:
a memory, configured to store computer program instructions and data; and
a processor, configured to execute the computer program instructions, to support the apparatus in implementing the method according to any one of claims 1 to 12 or claims 25 to 32.

34. A diagnostic device, wherein the diagnostic device comprises:
a memory, configured to store computer program instructions and data; and
a processor, configured to execute the computer program instructions, to support the diagnostic device in implementing the method according to any one of claims 13 to 20.

35. A server, wherein the server comprises:
a memory, configured to store computer program instructions and data; and
a processor, configured to execute the computer program instructions, to support the server in implementing the method according to any one of claims 21 to 24.

36. A security verification system, wherein the security verification system comprises the apparatus according to claim 33 and the server according to claim 35.

37. A vehicle, wherein the vehicle comprises the apparatus according to claim 33 and one or more ECUs.

38. A computer-readable storage medium, wherein the computer-readable storage medium stores computer program instructions, and when the computer program instructions are executed by a processing circuit, the method according to any one of claims 1 to 12, claims 13 to 20, claims 21 to 24, or claims 25 to 32 is implemented.

39. A computer program product comprising instructions, wherein when the computer program product runs on a computer, the computer is enabled to perform the method according to any one of claims 1 to 12, claims 13 to 20, claims 21 to 24, or claims 25 to 32.
